(19) Europäisches Patentamt / European Patent Office / Office européen des brevets

(11) **EP 4 518 199 A1**

(12) **EUROPEAN PATENT APPLICATION**
published in accordance with Art. 153(4) EPC

(43) Date of publication:
**05.03.2025 Bulletin 2025/10**

(21) Application number: **23796508.2**

(22) Date of filing: **27.04.2023**

(51) International Patent Classification (IPC):
*H04B 17/391* (2015.01)    *H04B 7/145* (2006.01)
*H04B 17/345* (2015.01)    *H04W 16/14* (2009.01)
*H04W 16/26* (2009.01)

(52) Cooperative Patent Classification (CPC):
**H04B 7/145; H04B 17/345; H04B 17/391;**
**H04W 16/14; H04W 16/26**

(86) International application number:
**PCT/JP2023/016738**

(87) International publication number:
**WO 2023/210773 (02.11.2023 Gazette 2023/44)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.04.2022  JP 2022075229**

(71) Applicant: **Sony Group Corporation**
**Tokyo 108-0075 (JP)**

(72) Inventor: **FURUICHI Sho**
**Tokyo 108-0075 (JP)**

(74) Representative: **Witte, Weller & Partner**
**Patentanwälte mbB**
**Postfach 10 54 62**
**70047 Stuttgart (DE)**

(54) **INFORMATION PROCESSING DEVICE, INFORMATION PROCESSING METHOD, AND COMPUTER PROGRAM**

(57)    Provided are an information processing device, an information processing method, and a computer program that enhance spectrum utilization efficiency in an effective manner.

An information processing device of the present disclosure includes a processing unit that calculates, on the basis of position information regarding a first receiver and arrangement information regarding a repeater that reflects a first radio wave transmitted from a first transmitter to relay the first radio wave to the first receiver, an interference source region for determining whether or not a second transmitter that makes a secondary use of a spectrum identical to or adjacent to a spectrum used by the first transmitter and the first receiver is located at a position where there is a possibility that a second radio wave transmitted by the second transmitter is reflected by the repeater to cause interference affecting the first receiver.

*FIG. 8*

**Description**

TECHNICAL FIELD

The present disclosure relates to an information processing device, an information processing method, and a computer program.

BACKGROUND ART

Hitherto, due to increase in a wireless environment in which various wireless systems are mixed and an enrichment of content provided wirelessly, a problem of exhaustion of radio resources (spectrum) that can be allocated to the wireless systems has emerged. Accordingly, as a means for extracting necessary radio resources, "dynamic spectrum sharing (dynamic spectrum access (DSA))" using temporal and spatial vacancies (white spaces) in a frequency band allocated to a specific wireless system has rapidly attracted attention.

In a fixed service (FS), a passive relay device called a passive repeater or the like is used to avoid obstacles that block radio waves in a mountainous area or the like. The passive repeater is a relay device having no amplifier, and passive repeaters that reflect radio waves using a metal plate are currently mainstream, but there are various types of passive repeaters.

Assuming that a wireless system such as an FS using a passive repeater is defined as a protection target system (primary system) and that a wireless system using radio waves under a frequency access system such as automated frequency coordination (AFC) in the 6 GHz band in the United States or spectrum access system (SAS) in citizens broadband radio service (CBRS) is defined as a secondary system, it is considered to allow the secondary system to make the secondary use of a spectrum while protecting the primary system from radio wave interference. In this case, considering the presence of the passive repeater in managing the secondary use of the spectrum by the secondary system is deemed beneficial in terms of protection of the primary system from interference.

CITATION LIST

NON-PATENT DOCUMENT

Non-Patent Document 1: "Passive Repeater Engineering", Microflect, 1989, available at: https://az276019.vo.msecnd.net/valmontstaging/vsna-resources/microflect-passive-repeater-catalog.pdf

Non-Patent Document 2: Electronic Code of Federal Regulations, Title 47, Chapter I, Subchapter A, Part 1, Subpart X Spectrum Leasing [available at https://ecfr.federalregister.gov/current/title-47/chapter-I/subchapter-D/part-96]

Non-Patent Document 3: WINNF-TS-0061-V1.5.1 Test and Certification for Citizens Broadband Radio Service (CBRS); Conformance and Performance Test Technical Specification; SAS as Unit Under Test (UUT) [available at https://cbrs.wirelessinnovation.org/release-1-of-the-baseline-standard-specifications]

Non-Patent Document 4: WINNF-TS-0016-V1.2.4 Signaling Protocols and Procedures for Citizens Broadband Radio Service (CBRS): Spectrum Access System (SAS) - Citizens Broadband Radio Service Device (CBSD) Interface Technical Specification [available at https://cbrs.wirelessinnovation.org/release-1-of-the-baseline-standard-specifications]

Non-Patent Document 5: 940660 D02 CBSD Handshake Procedures v02 [available at https://apps.fcc.gov/kdb/GetAttachment.html?id=RQe7oZJVSW      t0fCcNiBV%2Bfw%3D%3D&desc=940660%20D02%20CPE-CBSD%20Handshake%20Procedures%20v02&tracking_number=22929 7]

SUMMARY OF THE INVENTION

PROBLEMS TO BE SOLVED BY THE INVENTION

The present disclosure has been made in view of such circumstances, and it is therefore an object of the present disclosure to provide an information processing device, an information processing method, and a computer program that make it possible to enhance spectrum utilization efficiency.

SOLUTIONS TO PROBLEMS

An information processing device of the present disclosure includes a processing unit that calculates, on the

**EP 4 518 199 A1**

basis of position information regarding a first receiver and arrangement information regarding a repeater that reflects a first radio wave transmitted from the first transmitter to relay the first radio wave to the first receiver, an interference source region for determining whether or not a second transmitter that makes a secondary use of a spectrum identical to or adjacent to a spectrum used by the first transmitter and the first receiver is located at a position where a second radio wave transmitted by the second transmitter is likely to be reflected by the repeater and cause interference affecting the first receiver.

BRIEF DESCRIPTION OF DRAWINGS

Fig. 1 is a diagram illustrating a system model in an embodiment of the present disclosure.
Fig. 2 is a diagram illustrating a network configuration to which autonomous decision-making can be applied.
Fig. 3 is a diagram illustrating a network configuration to which centralized decision-making can be applied.
Fig. 4 is a diagram illustrating a network configuration in a case where both centralized decision-making and distributed decision-making are applied.
Fig. 5 is a diagram for describing a three-tier structure in CBRS.
Fig. 6 is a diagram for describing a flow of signaling between terminals.
Fig. 7 is a diagram schematically illustrating, in a planar manner, a communication system according to the embodiment of the present invention, a protection target system to be protected against radio wave interference from the communication system, and a repeater used to relay radio waves in the protection target system.
Fig. 8 is a block diagram of a communication device and a communication control device.
Fig. 9 is a diagram illustrating an example of an interference source region calculated for the protection target system.
Fig. 10 is a diagram illustrating Calculation Example 1 of the interference source region based on an incident angle of a radio wave incident on the repeater.
Fig. 11 is another diagram illustrating Calculation Example 1.
Fig. 12 is a diagram illustrating Calculation Example 2 of the interference source region.
Fig. 13 is a diagram schematically illustrating sidelobes of a reflected wave reflected by the repeater and an envelope of the sidelobes.
Fig. 14 is a diagram for describing Calculation Example 3 of the interference source region.
Fig. 15 is a diagram illustrating an example of an exclusion zone for protecting a receiver.
Fig. 16 is a diagram for describing a specific example of how to determine an exclusion zone for secondary use of a spectrum.
Fig. 17 is a flowchart of an example of processing according to the present embodiment.
Fig. 18 is a flowchart of another example of the processing according to the present embodiment.
Fig. 19 is a block diagram of another configuration example of the communication system according to the present embodiment.

MODE FOR CARRYING OUT THE INVENTION

Hereinafter, embodiments of the present disclosure will be described in detail with reference to the drawings. In one or more embodiments described in the present disclosure, elements included in each of the embodiments can be combined with each other, and the combined result also forms part of the embodiments described in the present disclosure.

<<1. Assumed representative scenario>>

<1.1 System model>

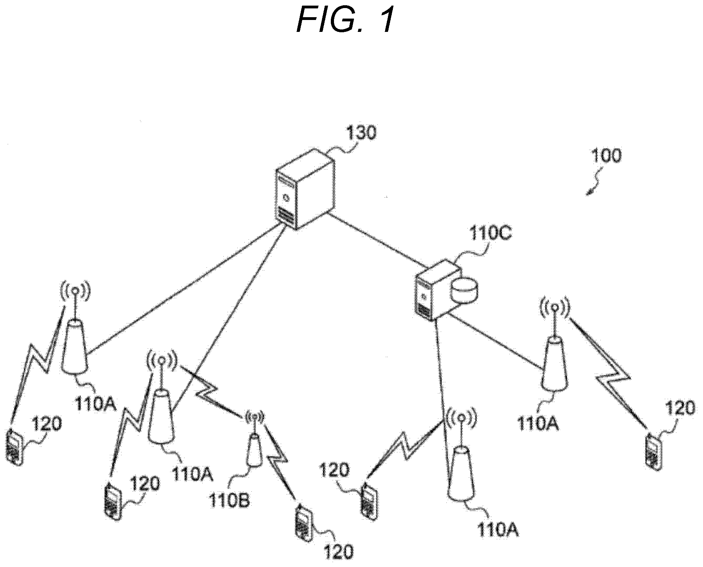

Fig. 1 illustrates a system model in an embodiment of the present invention. As illustrated in Fig. 1, this system model is represented by a communication network 100 including wireless communication, and typically includes the following entities.

- Communication device 110
- Terminal 120
- Communication control device 130

Furthermore, this system model includes at least a primary system and a secondary system using the communication network 100. The primary system and the secondary system are configured by the communication device 110 or the communication device 110 and the terminal 120. Various communication systems can be treated as the primary system or the secondary system, but in the present embodiment, it is assumed that the primary system and the secondary system each use some or all of a frequency band. Note that the respective frequency bands allocated to the primary system and the secondary system may partially or entirely overlap or may not overlap at all. That is, this system model will be described as a model of a wireless communication system related to dynamic spectrum sharing (dynamic spectrum access (DSA)). Note that this system model is not limited to systems related to dynamic spectrum sharing.

Typically, the communication device 110 is a wireless device that provides a wireless communication service to the terminal 120, such as a wireless base station (Base station, Node B, eNB, gNB, or the like) or a wireless access point. That is, the communication device 110 provides the wireless communication service to enable wireless communication of the terminal 120. Furthermore, the communication device 110 may be a wireless relay device or an optical extension device called a Remote Radio Head (RRH). In the following description, unless otherwise noted, the communication device 110 will be described as an entity constituting the secondary system.

The coverage (communication region) provided by the communication device 110 is allowed to have various sizes from a large size such as a macro cell to a small size such as a pico cell. Like a distributed antenna system (DAS), a plurality of the communication devices 110 may form one cell. Furthermore, in a case where the communication device 110 has a capability of beamforming, a cell or a service area may be formed for each beam.

In the present disclosure, it is assumed that there are two different types of communication devices 110.

In the present disclosure, the communication device 110 that can access the communication control device 130 without using a wireless path that requires permission of the communication control device 130 is referred to as a "communication device 110A". Specifically, for example, the communication device 110 capable of a wired Internet connection can be regarded as the "communication device 110A". Furthermore, for example, even in a wireless relay device that does not have a wired Internet connection function, if a wireless backhaul link using a spectrum that does not require permission of the communication control device 130 is constructed with another communication device 110A, such a wireless relay device may also be regarded as the "communication device 110A".

In the present disclosure, the communication device 110 that cannot access the communication control device 130 without a wireless path that requires permission of the communication control device 130 is referred to as a "communication device 110B". For example, a wireless relay device that needs to construct a backhaul link using a spectrum that requires permission of the communication control device 130 can be regarded as a "communication device 110B". Furthermore, for example, a device such as a smartphone having a wireless network provision function represented by tethering and using a spectrum that requires permission of the communication control device 130 in both the backhaul link and the access link may be treated as the "communication device 110B".

The communication device 110 is not necessarily fixedly installed. For example, the communication device 110 may be installed in a mobile object such as an automobile. Furthermore, the communication device 110 does not necessarily need to exist on the ground. For example, the communication device 110 may be included in an object existing in the air or space, such as an aircraft, a drone, a helicopter, a high altitude platform station (HAPS), a balloon, or a satellite. Furthermore, for example, the communication device 110 may be included in an object existing on the sea or under the sea, such as a ship or a submarine. Typically, such a mobile communication device 110 corresponds to the communication device 110B, and performs wireless communication with the communication device 110A to secure an access path to the communication control device 130. As a matter of course, even the mobile communication device 110 can be treated as the communication device 110A as long as the spectrum used in the wireless communication with the communication device 110A is not managed by the communication control device 130.

In the present disclosure, unless otherwise specified, the description "communication device 110" includes both meanings of the communication device 110A and the communication device 110B, and may be replaced with either one.

The communication device 110 can be used, operated, or managed by various operators. For example, a mobile network operator (MNO), a mobile virtual network operator (MVNO), a mobile network enabler (MNE), a mobile virtual network enabler (MVNE), a shared facility operator, a neutral host network (NHN) operator, a broadcaster, an enterprise, an educational institution (educational institutions, respective boards of education of local governments, or the like), a real estate (building, apartment, or the like) administrator, an individual, and the like can be assumed as operators related to the communication device 110. Note that the operator related to the communication device 110 is not particularly limited. Furthermore, the communication device 110A may be a shared facility used by a plurality of operators. Furthermore, different operators may perform installation, use, and management of the facilities.

The communication device 110 operated by the operator is typically connected to the Internet via a core network. Furthermore, operation, management, and maintenance are performed by a function called Operation, Administration & Maintenance (OA&M). Furthermore, for example, as illustrated in Fig. 1, there may be an intermediate device (network manager) 110C that centrally controls the communication devices 110 in the network. Note that there may be cases where the intermediate device is the communication device 110 or cases where the intermediate device is the communication control device 130.

The terminal 120 (User Equipment, User Terminal, User Station, Mobile Terminal, Mobile Station, or the like) is a device that performs wireless communication using a wireless communication service provided by the communication device 110. Typically, communication equipment such as a smartphone corresponds to the terminal 120. Note that a device having a wireless communication function can correspond to the terminal 120. For example, equipment such as a business camera having a wireless communication function can also correspond to the terminal 120 even if the wireless communication is not a main application. Furthermore, communication equipment that transmits data to the terminal 120, such as a wireless station for broadcasting business (field pickup unit (FPU)) that transmits an image for television broadcasting or the like from an outside (site) of a broadcast station to the broadcast station in order to broadcast sports or the like, also corresponds to the terminal 120. Furthermore, the terminal 120 is not necessarily used by a person. For example, like what is called machine type communication (MTC), equipment such as a factory machine or a sensor installed in a building may be network-connected to operate as the terminal 120. Furthermore, a device called customer premises equipment (CPE) provided to ensure connection to the Internet may behave as the terminal 120.

Furthermore, as represented by device-to-device (D2D) and vehicle-to-everything (V2X), the terminal 120 may include a relay communication function.

Furthermore, similarly to the communication device 110, the terminal 120 need not be fixedly installed or exist on the ground. For example, an object existing in the air or space, such as an aircraft, a drone, a helicopter, a satellite, or the like, may operate as the terminal 120. Furthermore, for example, an object existing on the sea or under the sea, such as a ship or a submarine, may operate as the terminal 120.

In the present disclosure, unless otherwise noted, the terminal 120 corresponds to an entity where a wireless link using a spectrum that requires permission of the communication control device 130 terminates. However, depending on a function included in the terminal 120 or an applied network topology, the terminal 120 can perform an operation equivalent to that of the communication device 110. In other words, depending on the network topology, there may be cases where a device that can correspond to the communication device 110 such as a wireless access point corresponds to the terminal 120, or cases where a device that can correspond to the terminal 120 such as a smartphone corresponds to the communication device 110.

The communication control device 130 is typically a device that determines, permits, gives an instruction on, and/or manages communication parameters of the communication device 110. For example, database servers called TV white space database (TVWSDB), geolocation database (GLDB), spectrum access system (SAS), and automated frequency coordination (AFC) correspond to the communication control device 130. In other words, a database server having an authority and a role such as authentication and supervision of radio wave use related to secondary use of a spectrum can be regarded as the communication control device 130.

The communication control device 130 also corresponds to a database server having a role different from the above-described role. For example, a control device that performs radio wave interference control between communication devices represented by a Spectrum Manager (SM) in EN 303 387 of the European Telecommunications Standards Institute (ETSI), a Coexistence Manager (CM) in the Institute of Electrical and Electronics Engineers (IEEE) 802.19.1-2018, a Coexistence Manager (CxM) in CBRSA-TS-2001, or the like also corresponds to the communication control device 130. Furthermore, for example, a registered location secure server (RLSS) defined in IEEE 802.11-2016 also corresponds to the communication control device 130. That is, not limited to these examples, an entity responsible for determination, use permission, instruction, management, and the like of the communication parameters of the communication device 110 may be referred to as the communication control device 130. Basically, the control target of the communication control device 130 is the communication device 110, but the communication control device 130 may control the terminal 120 subordinate to the communication device 110.

The communication control device 130 also corresponds to a combination of a plurality of database servers having different roles. For example, CBRS Alliance SAS (CSAS) which is a combination of SAS and CxM illustrated in CBRSA-TS-2001 can also be regarded as the communication control device 130.

The communication control device 130 can also be implemented by software having a function equivalent to that of the database server installed on one database server. For example, a SAS having a function or software equivalent to CxM can also be regarded as the communication control device 130.

There may be a plurality of communication control devices 130 having similar roles. In a case where there is the plurality of communication control devices 130 having similar roles, at least one of the following three types of decision-making topologies can be applied to the communication control device 130.

- Autonomous decision-making
- Centralized decision-making
- Distributed decision-making

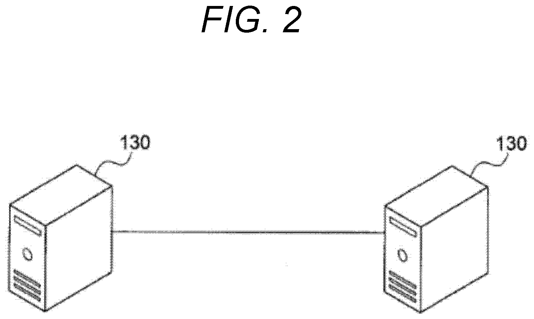

The autonomous decision-making is a decision-making topology in which an entity (the decision-making entity, here the communication control device 130) that makes a decision makes a decision independently from another decision-making entity. The communication control device 130 independently calculates necessary spectrum allocation and interference control. For example, in a case where a plurality of communication control devices 130 is arranged in a distributed manner as illustrated in Fig. 2, the autonomous decision-making can be applied.

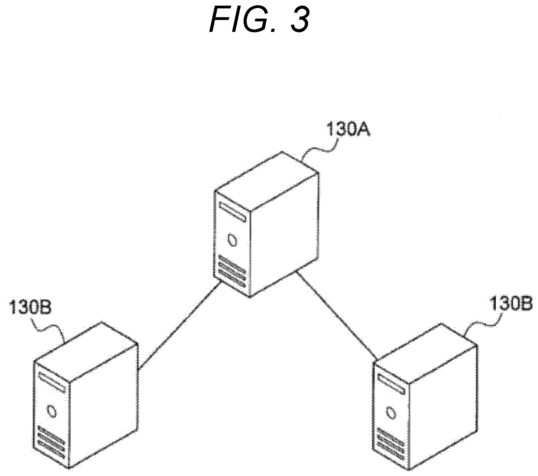

The centralized decision-making is a decision-making topology in which a decision-making entity delegates decision-making to another decision-making entity. In a case where the centralized decision-making is performed, for example, a model as illustrated in Fig. 3 can be assumed. Fig. 3 illustrates a model (what is called master-slave type) in which one communication control device 130 performs centralized control of the plurality of communication control devices 130. In the model of Fig. 3, the communication control device 130A, which is the master, can control the communication control devices 130B, which are a plurality of slaves, to intensively make decisions.

The distributed decision-making is a decision-making topology in which a decision-making entity makes a decision in cooperation with another decision-making entity. For example, while a plurality of communication control devices 130 independently makes a decision as in the autonomous decision-making in Fig. 2, mutual adjustment of decision-making results, negotiation, and the like performed by each communication control device 130 after making a decision may correspond to "distributed decision-making". Furthermore, for example, in the centralized decision-making in Fig. 3, for the purpose of load balancing or the like, performing dynamic delegation of decision-making authority to each slave communication control device 130B, deletion thereof, or the like by the master communication control device 130A can also be regarded as "distributed decision-making".

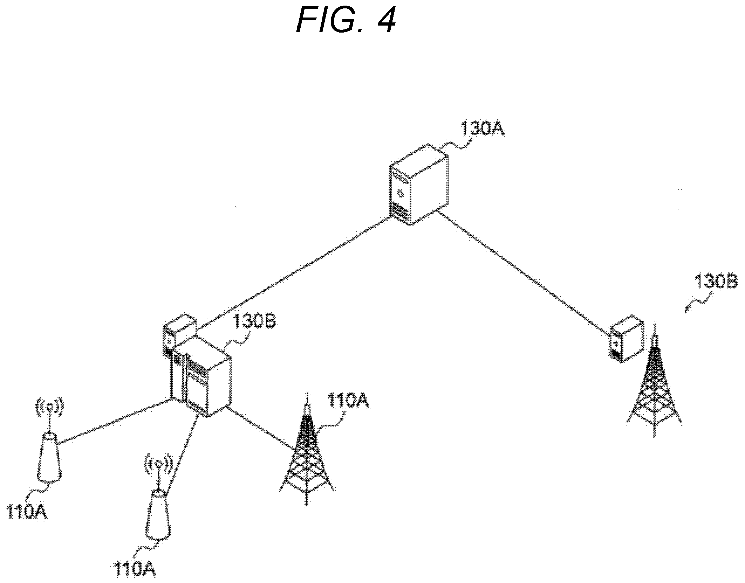

There may be cases where both the centralized decision-making and the distributed decision-making are applied. In Fig. 4, the slave communication control device 130B operates as an intermediate device that bundles the plurality of communication devices 110. It is not necessary for the master communication control device 130A to control the communication devices 110 bundled by the slave communication control device 130B, that is, the secondary system configured by the slave communication control device 130B. As described above, as a modification, implementation as illustrated in Fig. 4 is also possible.

The communication control device 130 may also acquire necessary information from entities other than the communication device 110 and the terminal 120 of the communication network 100 for its role. Specifically, for example, information necessary for protecting the primary system can be acquired from a database (regulatory database) managed or operated by a radio administration agency (national regulatory authority (NRA)) of a country or a region. Examples of the regulatory database include the Universal Licensing System (ULS) operated by the Federal Communications Commissions (FCC), and the like. Examples of information necessary for protecting the primary system include, for example, position information of the primary system, communication parameters of the primary system, an out-of-band emission (OOBE) limit, an adjacent channel leakage ratio (ACLR), adjacent channel selectivity, a fading margin, a protection ratio (PR), and the like. In a region where a fixed numerical value, an acquisition method, a derivation method, and the like are defined by a law or the like in order to protect the primary system, it is desirable to use information defined by the law as information necessary for protecting the primary system.

Furthermore, a database that records the communication device 110 and the terminal 120 that have been subjected to conformity authentication, such as an equipment authorization system (EAS) managed by the Office of Engineering and Technology (OET) of the FCC, also corresponds to the regulatory database. From such a regulatory database, it is possible to acquire information regarding an operable spectrum of the communication device 110 or the terminal 120, information regarding maximum equivalent isotropic radiated power (EIRP), and the like. Naturally, the communication control device 130 may use these pieces of information for protecting the primary system.

Furthermore, it can also be assumed that the communication control device 130 acquires radio wave sensing information from a radio wave sensing system installed and operated for the purpose of radio wave detection in the primary system. As a specific example, in citizens broadband radio service (CBRS) in the United States, the communication control device 130 acquires radio wave detection information of a ship radar as a primary system from a radio wave sensing system called an environmental sensing capability (ESC). Furthermore, in a case where the communication device 110 and the terminal 120 have a sensing function, the communication control device 130 may acquire radio wave detection information of the primary system from these.

Furthermore, it can also be assumed that the communication control device 130 acquires activity information of the primary system from a portal system that manages the activity information of the primary system. As a specific example, in citizens broadband radio service (CBRS) in the United States, the communication control device 130 acquires the activity information of the primary system from a calendar-type system called Informing Incumbent Portal. Protection of the primary system is achieved by enabling a protection area called Dynamic Protection Area (DPA) on the basis of the acquired activity information. Protection of the primary system is also implemented by an equivalent system called Informing Incumbent Capability (IIC) in a similar manner.

The interface between the respective entities constituting this system model may be wired or wireless. For example, not only a wired line but also a wireless interface that does not depend on spectrum sharing may be used as an interface between the communication control device 130 and the communication device 110. Examples of the wireless interface that does not depend on spectrum sharing include, for example, a wireless communication line provided by a mobile network operator via a licensed band, Wi-Fi communication using an existing license-exempt band, and the like.

<1.2 Terms related to spectrum and sharing>

As described above, the present embodiment will be described assuming a dynamic spectrum sharing (Dynamic Spectrum Access) environment. As a representative example of the dynamic spectrum sharing, a mechanism defined by the CBRS in the United States (that is, a mechanism defined in Part 96 Citizens Broadband Radio Service of the FCC Rules of the United States) will be described.

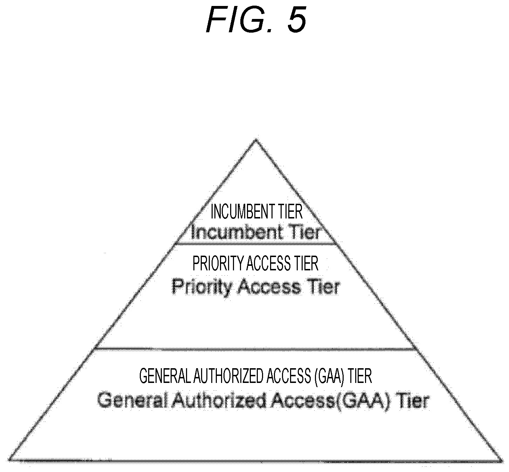

In the CBRS, as illustrated in Fig. 5, each of users in the frequency band is classified into one of three groups. This group is referred to as a tier. The three groups are referred to as an Incumbent Tier, a Priority Access Tier, and a General Authorized Access (GAA) Tier, respectively.

The Incumbent Tier is a group including existing users who conventionally use frequency bands. The existing user is also generally referred to as a primary user. In the CBRS, the Department of Defense (DOD), fixed satellite operators, and new rule excepted radio broadband licensees (Grandfathered Wireless Broadband Licensees (GWBL)) in the United States are defined as existing users. The Incumbent Tier is not required to avoid interference to the Priority Access Tier and the GAA Tier with lower priorities or to suppress use of the frequency band. Furthermore, the Incumbent Tier is protected from interference by the Priority Access Tier and the GAA Tier. That is, users of the Incumbent Tier can use the frequency band without considering the existence of other groups.

The Priority Access Tier is a group including users who use the frequency band on the basis of the above-described priority access license (PAL). A user of the Priority Access Tier is also generally referred to as a secondary user. When the frequency band is used, the Priority Access Tier is required to avoid interference and to suppress use of the frequency band for the Incumbent Tier having a higher priority than the Priority Access Tier. On the other hand, neither avoiding interference nor suppressing use of the frequency band is required for the GAA Tier having a lower priority than the priority access tier. Furthermore, the Priority Access Tier is not protected from interference by the Incumbent Tier with a higher priority, but is protected from interference by the GAA Tier with a lower priority.

The GAA Tier is a group including frequency band users that do not belong to the Incumbent Tier and the Priority Access Tier. Similarly to the Priority Access Tier, in general, a user of the GAA Tier is also referred to as a secondary user. However, since the priority of shared use is lower than that of the Priority Access Tier, it is also referred to as a low priority secondary user. When the frequency band is used, the GAA Tier is required to avoid interference and suppress use of the frequency band for the Incumbent Tier and the Priority Access Tier having higher priorities. Furthermore, the GAA Tier is not protected from interference by the Incumbent Tier and Priority Access Tier with higher priority.

Although the CBRS mechanism has been described above as a representative example of the dynamic spectrum sharing, the present embodiment is not limited to the definition of CBRS. For example, as illustrated in Fig. 5, the CBRS generally employs a three-tier structure, but a two-tier structure may be employed in the present embodiment. Representative examples of the two-tier structure include Authorized Shared Access (ASA), Licensed Shared Access (LSA), evolved LSAs (eLSAs), TV band white space (TVWS), US 6 GHz band sharing, and the like. In the ASA, the LSA, and the eLSA, there is no GAA Tier, and a structure equivalent to a combination of the Incumbent Tier and the Priority Access Tier is employed. Furthermore, in the TVWS and the US 6 GHz band sharing, there is no Priority Access Tier, and a structure equivalent to a combination of the Incumbent Tier and the GAA Tier is employed. Furthermore, there may be four or more tiers. Specifically, for example, four or more tiers may be generated by providing a plurality of intermediate layers corresponding to the Priority Access Tiers and giving different priorities to the respective intermediate layers, and the like. Furthermore, for example, the tiers may be increased by similarly dividing the GAA Tier and giving priorities, and the like. That is, each group may be divided.

Furthermore, the primary system of the present embodiment is not limited to the definition of CBRS. For example, as an example of the primary system, a wireless system such as TV broadcasting, a fixed microwave line (fixed system (FS)), a meteorological radar, a radio altimeter, a wireless train control system (communications-based train control), and a radio astronomy are assumed. Furthermore, the present embodiment is not limited thereto, and any wireless system can be the primary system of the present embodiment.

Furthermore, as described above, the present embodiment is not limited to the environment of spectrum sharing. In general, in spectrum sharing or spectrum secondary use, an existing system that uses a target frequency band is referred to as a primary system, and a secondary user is referred to as a secondary system. However, in a case where the present embodiment is applied to an environment other than the spectrum sharing environment, they should be read by replacing with other terms. For example, a macrocell base station in a heterogeneous network (HetNet) may be the primary system, and a small cell base station or a relay station may be the secondary system. Furthermore, the base station may be the primary system, and a relay user equipment (Relay UE) or a Vehicle UE that implements D2D or V2X existing within its coverage may be the secondary system. The base station is not limited to a fixed type, and may be a portable type or a mobile type. In such a case, for example, the communication control device 130 of the present embodiment may be included in a core network, a base station, a relay station, a Relay UE, or the like.

Furthermore, in a case where the present embodiment is applied to an environment other than the spectrum sharing environment, the term "spectrum" in the present disclosure is replaced with another term shared by the application destination. For example, terms such as "resource", "resource block", "resource element", "resource pool", "channel", "component carrier", "carrier", "subcarrier", "bandwidth part (BWP)", and "frequency range", or another term having a meaning equivalent or similar thereto are assumed to be used.

<<1. Description of various procedures assumed in present embodiment>>

Here, a basic procedure that can be used in the implementation of the present embodiment will be described. Note that up to <2.5> described later will be described on the assumption that the processing is mainly performed in the communication device 110A.

<2.1 Registration procedure>

A registration procedure is a procedure for registering information of a wireless system that intends to use the frequency band. More specifically, it is a procedure for registering device parameters related to the communication device 110 of the wireless system in the communication control device 130. Typically, the registration procedure is started by that the communication device 110 representing a wireless system that intends to use the frequency band notifies the communication control device 130 of a registration request including the device parameters. Note that, in a case where a plurality of the communication devices 110 belongs to the wireless system that intends to use the frequency band, the device parameters of each of the plurality of communication devices is included in the registration request. Furthermore, a device that transmits the registration request as a representative of the wireless system may be appropriately determined.

<2.1.1 Details of required parameters>

The device parameter refers to, for example, the following information.

- Information regarding a user of the communication device 110 (hereinafter described as user information)
- Information unique to the communication device 110 (hereinafter described as unique information)
- Information regarding a position of the communication device 110 (hereinafter described as position information)
- Information regarding an antenna included in the communication device 110 (hereinafter described as antenna information)
- Information regarding the wireless interface included in the communication device 110 (hereinafter described as wireless interface information)
- Legal information regarding the communication device 110 (hereinafter described as legal information)
- Information regarding an installer of the communication device 110 (hereinafter described as installer information)
- Information regarding the group to which the communication device 110 belongs (hereinafter, group information)

The device parameter is not limited to the above. Information other than these may be treated as the device parameters. Note that the device parameters do not need to be transmitted at once, and may be transmitted in a divided manner a plurality of times. That is, a plurality of registration requests may be transmitted for one registration procedure. In this manner, one procedure or one processing in the procedure may be performed a plurality of times. This similarly applies to the procedure described below.

The user information is information related to the user of the communication device 110. For example, a user ID, an account name, a user name, a user contact address, a call sign, and the like can be assumed. The user ID and the account name may be independently generated by the user of the communication device 110 or may be issued in advance by the communication control device 130. As the call sign, it is desirable to use a call sign issued by the NRA.

The user information can be used, for example, in an application of interference resolution. As a specific example, in a spectrum use notification procedure described in <2.5> to be described later, even if the communication control device 130 makes the use stop determination on the spectrum being used by the communication device 110 and gives an instruction based on the use stop determination, there may be a case where notification of a spectrum use notification request of the spectrum is continuously provided. In this case, suspecting a failure of the communication device 110, the communication control device 130 can give a behavior check request for the communication device 110 to the user contact address included in the user information. Not limited to this example, in a case where it is determined that the communication device 110 is performing an operation against communication control performed by the communication control device 130, the communication control device 130 can make a contact using the user information.

The unique information is information that can specify the communication device 110, product information of the communication device 110, information regarding hardware or software of the communication device 110, and the like.

The information that can specify the communication device 110 can include, for example, a manufacturing number (serial number) of the communication device 110, an ID of the communication device 110, and the like. The ID of the communication device 110 may be uniquely given by the user of the communication device 110, for example.

The product information of the communication device 110 can include, for example, information regarding an authentication ID, a product model number, a manufacturer, and the like. The authentication ID is, for example, an ID given from a certificate authority in each country or region, such as an FCC ID in the United States, a CE number in Europe, and a technical standards conformity certification (technical conformity) in Japan. An ID issued by an industry association or the like on the basis of a unique authentication program may also be regarded as the authentication ID.

The unique information represented by these may be used, for example, for a permission list (allowlist) or a denial list (denylist). For example, in a case where any piece of information regarding the communication device 110 in operation is included in the denial list, the communication control device 130 can instruct the communication device 110 to stop using the spectrum in the spectrum use notification procedure described in <2.5> described later. Moreover, the communication control device 130 can take a behavior of not canceling the use stop measure until the communication device 110 is cancelled from the denial list. Furthermore, for example, the communication control device 130 can reject registration of the communication device 110 included in the denial list. Furthermore, for example, the communication control device 130 can also perform an operation that does not consider the communication device 110 corresponding to the information included in the denial list in the interference calculation of the present disclosure or that considers only the communication device 110 corresponding to the information included in the permission list in the interference calculation.

Note that, in the present disclosure, the FCC ID may be used as information regarding transmission power. For example, in an equipment authorization system (EAS) database, which is a type of regulatory database, information regarding a device for which authentication has been acquired can be acquired, and an application programming interface (API) thereof is also disclosed. For example, certified maximum EIRP information or the like can be included in the information together with the FCC ID. Since such power information is associated with the FCC ID, the FCC ID can be handled as transmission power information. Similarly, the FCC ID may be treated as equivalent to other information included in the EAS. Furthermore, not limited to the FCC ID, in a case where information associated with the authentication ID is present, the authentication ID may be treated as equivalent to the information.

The information regarding the hardware of the communication device 110 can include, for example, transmission power class information. For example, in Title 47 Code of Federal Regulations (C.F.R) Part 96 in the United States, two types of classes Category A and Category B are defined as the transmission power class information, and information regarding the hardware of the communication device 110 conforming to the definition can include information regarding which of the two types of classes it belongs to. Furthermore, in TS36.104 and TS38.104 of 3rd Generation Partnership Project (3GPP), some classes of eNodeB and gNodeB are defined, and these definitions can also be used.

The transmission power class information can be used, for example, in an application of interference calculation. The interference calculation can be performed using the maximum transmission power defined for each class as the transmission power of the communication device 110.

The information regarding the software of the communication device 110 can include, for example, version information, a build number, and the like regarding an execution program in which processing necessary for interaction with the communication control device 130 is described. Furthermore, version information, a build number, and the like of software for operating as the communication device 110 may also be included.

The position information is typically information that can specify the position of the communication device 110. For example, it is coordinate information acquired by a positioning function represented by the Global Positioning System (GPS), Beidou, the Quasi-Zenith Satellite System (QZSS), Galileo, or the Assisted Global Positioning System (A-GPS). Typically, information related to latitude, longitude, ground level or sea level, altitude, and positioning error can be included. Alternatively, for example, the position information may be position information registered in an information management device managed by the National Regulatory Authority (NRA) or its entrusted institution. Alternatively, for example, coordinates of an X axis, a Y axis, and a Z axis with a specific geographical position as an origin may be used. Furthermore, together with such coordinate information, an identifier indicating whether the communication device 110 exists outdoors or indoors can be given.

Furthermore, the position information may include positioning accuracy information (location uncertainty). For example, both or one of a horizontal plane and a vertical plane may be provided as the positioning accuracy information. For example, the positioning accuracy information (location uncertainty) can be used as a correction value when calculating a distance to any point. Furthermore, for example, the positioning accuracy information can also be used as region information in which the communication device 110 is likely to be located. In this case, it is used for processing of specifying spectrum information that can be used in the region indicated by the positioning accuracy information.

Furthermore, the position information may be information indicating a region in which the communication device 110 is located. For example, information indicating a region determined by the government, such as a postal code or an address, may be used. Furthermore, for example, the region may be indicated by a set of three or more geographic coordinates. These pieces of information indicating the region may be provided together with the coordinate information.

Furthermore, in a case where the communication device 110 is located indoors, information indicating the floor of a building where the communication device 110 is located can also be included in the position information. For example, an identifier indicating the number of floors, the ground, or the underground, or the like can be included in the position information. Furthermore, for example, information indicating a further closed space inside a building, such as a room number and a room name in the building, can be included in the position information.

Typically, the positioning function is desirably included in the communication device 110. However, there may be cases where performance of the positioning function does not satisfy the required accuracy. Furthermore, even if the performance of the positioning function satisfies the required accuracy, there may be a case where it is not always possible to acquire the position information that satisfies the required accuracy depending on an installation position of the communication device 110. Therefore, a device different from the communication device 110 may include the positioning function, and the communication device 110 may acquire information related to the position from the device. The device having the positioning function may be an available existing device, or may be provided by the installer of the communication device 110. In such a case, it is desirable that the position information measured by the installer of the communication device 110 is written in the communication device 110.

The antenna information is typically information indicating performance, a configuration, and the like of an antenna included in the communication device 110. Typically, for example, information such as an antenna installation height, a tilt angle (downtilt), a horizontal orientation (azimuth), a boresight, an antenna peak gain, and an antenna model can be included.

Furthermore, the antenna information can also include information regarding a formable beam. For example, information such as a beam width, a beam pattern, and an analog or digital beamforming capability can be included.

Furthermore, the antenna information can also include information regarding performance and configuration of multiple input multiple output (MIMO) communication. For example, information such as the number of antenna elements and the maximum number of spatial streams (or the number of MIMO layers) can be included. Furthermore, codebook information to be used, weight matrix information, and the like can also be included. The weight matrix information includes a unitary matrix, a zero-forcing (ZF) matrix, a minimum mean square error (MMSE) matrix, and the like, which are obtained by singular value decomposition (SVD), eigen value decomposition (EVD), block diagonalization (BD), and the like. Furthermore, in a case where the communication device 110 includes a function such as maximum likelihood detection (MLD) that requires nonlinear calculation, information indicating the included function may be included in the antenna information.

Furthermore, the antenna information may include a zenith of direction, departure (ZoD). The ZoD is a type of radio wave arrival angle. Note that instead of being provided in notification from the communication device 110, the ZoD may be estimated and provided in notification by another communication device 110 from radio waves radiated from the antenna of the communication device 110. In this case, the communication device 110 may be a device that operates as a base station or an access point, a device that performs D2D communication, a moving relay base station, or the like. The ZoD may be estimated by a radio wave direction of arrival estimation technology such as multiple signal classification (MUSIC) or estimation of signal propagation via rotation invariance techniques (ESPRIT). Furthermore, the ZoD can be used by the communication control device 130 as measurement information.

The wireless interface information is typically information indicating a wireless interface technology included in the communication device 110. For example, identifier information indicating a technology used in GSM, CDMA2000, UMTS, E-UTRA, E-UTRA NB-IoT, 5G NR, 5G NR NB-IoT or a further next generation cellular system can be included as the wireless interface information. Furthermore, identifier information indicating a derivative technology based on Long Term Evolution (LTE)/5G such as MulteFire, Long Term Evolution-Unlicensed (LTE-U), or NR-Unlicensed (NR-U) can be included. Furthermore, identifier information indicating a standard technology such as a metropolitan area network (MAN) such as WiMAX or WiMAX2+ or a wireless LAN of the IEEE 802.11 series can also be included. Furthermore, identifier information indicating an extended global platform (XGP) or a shared XGP (sXGP) may be used. It may be identifier information of a communications technology for local power, wide area (LPWA). Furthermore, identifier information indicating a proprietary wireless technology can also be included. Furthermore, a version number or a release number of the technical specification that defines these technologies may also be included as the wireless interface information.

Furthermore, the wireless interface information can also include frequency band information supported by the communication device 110. For example, the frequency band information can be represented by an upper limit frequency, a lower limit frequency, a center frequency, a bandwidth, a 3GPP operating band number, or a combination of at least two of these, or the like. Furthermore, one or more pieces of frequency band information can be included in the wireless interface information.

The frequency band information supported by the communication device 110 can further include information indicating capability of a band extension technology such as carrier aggregation (CA) or channel bonding. For example, combinable band information or the like can be included. Furthermore, the carrier aggregation can also include information regarding a band desired to be used as a primary component carrier (PCC) or a secondary component carrier (SCC). Furthermore, the number of component carriers (the number of CCs) that can be aggregated at the same time can be included.

The frequency band information supported by the communication device 110 may further include information indicating a combination of frequency bands supported by the dual connectivity and the multi connectivity. Furthermore, information of another communication device 110 that cooperatively provides the dual connectivity and the multi connectivity may also be provided. The communication control device 130 may perform determination of the communication control disclosed in the present embodiment in consideration of another communication device 110 having a cooperative relationship or the like in subsequent procedures.

The frequency band information supported by the communication device 110 may also include information indicating radio wave usage priority such as PAL and GAA.

Furthermore, the wireless interface information can also include modulation scheme information supported by the communication device 110. For example, as a representative example, information indicating a primary modulation scheme such as frequency shift keying (FSK), n-value phase shift keying (PSK, where n is a multiplier of two, such as two, four, eight, or the like), and n-value quadrature amplitude modulation (QAM, where n is a multiplier of four, such as four, sixteen, 64, 256, 1024) can be included. Furthermore, information indicating a secondary modulation scheme such as orthogonal frequency division multiplexing (OFDM), scalable OFDM, DFT spread OFDM (DFT-s-OFDM), generalized frequency division multiplexing (GFDM), and filter bank multi carrier (FBMC) can be included.

Furthermore, the wireless interface information can also include information regarding an error correction code. For example, capabilities of a turbo code, a low density parity check (LDPC) code, a polar code, an erasure correction code, and the like, and coding rate information to be applied can be included.

The modulation scheme information and the information regarding the error correction code can also be expressed by a modulation and coding scheme (MCS) index as another aspect.

Furthermore, the wireless interface information can also include information indicating a function specific to each wireless technical specification supported by the communication device 110. For example, as a representative example, there is transmission mode (TM) information defined in LTE. Furthermore, those having two or more modes for a specific function can be included in the wireless interface information such as TM information. Furthermore, in the technical specification, in a case where the communication device 110 supports a function that is not essential in the specification even if there are not two or more modes, information indicating the supported function can also be included.

Furthermore, the wireless interface information can also include radio access technology (RAT) information supported by the communication device 110. For example, information indicating time division multiple access (TDMA), frequency division multiple access (FDMA), orthogonal frequency division multiple access (OFDMA), power division multiple access (PDMA), code division multiple access (CDMA), sparse code multiple access (SCMA), interleave division multiple access (IDMA), spatial division multiple access (SDMA), carrier sense multiple access/collision avoidance (CSMA/CA), carrier sense multiple access/collision detection (CSMA/CD), or the like can be included. Note that the TDMA, FDMA, and OFDMA are classified into orthogonal multiple access (OMA). The PDMA, CDMA, SCMA, IDMA, and SDMA are classified into non orthogonal multiple access (NOMA). A representative example of the PDMA is a technique implemented by a combination of superposition coding (SPC) and successive interference canceller (SIC). The CSMA/CA and CSMA/CD are classified into opportunistic access.

In a case where the wireless interface information includes information indicating the opportunistic access, information indicating details of the access method may be further included. As a specific example, information indicating which of frame based equipment (FBE) and load based equipment (LBE) defined in EN 301 598 of ETSI may be included.

In a case where the radio interface information indicates the LBE, the wireless interface information may further include LBE-specific information such as a priority class.

Furthermore, the wireless interface information can also include information regarding a duplex mode supported by the communication device 110. As a representative example, information regarding a method such as frequency division duplex (FDD), time division duplex (TDD), or full duplex (FD) can be included for example.

In a case where TDD is included as the wireless interface information, TDD frame structure information used or supported by the communication device 110 can be given. Furthermore, information related to the duplex mode may be included for each frequency band indicated by the frequency band information.

In a case where the FD is included as the wireless interface information, information regarding an interference power detection level may be included.

Furthermore, the wireless interface information can also include information regarding a transmission diversity method supported by the communication device 110. For example, space time coding (STC) or the like may be included.

Furthermore, the wireless interface information can also include guard band information. For example, information regarding a predetermined guard band size in the wireless interface can be included. Alternatively, for example, information regarding a guard band size desired by the communication device 110 may be included.

Regardless of the aspects described above, the wireless interface information may be provided for each frequency band.

The legal information is typically information regarding regulations that the communication device 110 has to comply with and defined by the radio administration agency or an equivalent agency in each country or region, authentication information acquired by the communication device 110, or the like. Typically, the information regarding the regulations can include, for example, upper limit value information of out-of-band emission, information regarding a blocking characteristic of the receiver, and the like. Typically, the authentication information can include, for example, type approval information, legal regulation information serving as an authentication acquisition criterion, and the like. The type approval information corresponds to, for example, FCC ID in the United States, the technical standards conformity certification in Japan, and the like. The legal regulation information corresponds to, for example, FCC regulation numbers in the United States, ETSI Harmonized Standard number in Europe, and the like.

Among the legal information, regarding numerical values, those defined in the standard specification of wireless interface technology may be substituted. The standard specification of the wireless interface technology corresponds to, for example, 3GPP TS36.104, TS38.104, or the like. An adjacent channel leakage ratio (ACLR) is defined therein. Instead of the upper limit information of the out-of-band emission, the upper limit of the out-of-band emission may be derived and used using the ACLR defined in the standard specification. Furthermore, the ACLR itself may be used as necessary. Furthermore, adjacent channel selectivity (ACS) may be used instead of the blocking characteristic. Furthermore, these may be used in combination, or an adjacent channel interference ratio (ACIR) may be used. Note that, in general, the ACIR has the following relationship with the ACLR and ACS.

[Math. 1]

$$ACIR = \left( \frac{1}{ACS} + \frac{1}{ACLR} \right)^{-1} \quad (1)$$

Note that although Expression (1) uses true value expression, Expression (1) may be expressed by logarithmic expression.

The installer information can include information capable of specifying a person who installs the communication device 110 (installer), unique information associated with the installer, and the like. Typically, the installer information can include information regarding a person who is responsible for the position information of the communication device 110, such as a certified professional installer (CPI) defined in Non-Patent Document 2. The CPI discloses certified professional installer registration ID (CPIR-ID) and CPI name. Furthermore, as unique information associated with the CPI, for example, a contact address (mailing address or contact address), an e-mail address, a telephone number, a public key identifier (PKI), and the like are disclosed. It is not limited thereto, and other information related to the installer may be included in the installer information as necessary.

The group information can include information regarding the communication device group to which the communication device 110 belongs. Specifically, for example, information related to the same or equivalent type of group as disclosed in WINNF-SSC-0010 can be included. Furthermore, for example, in a case where the communication operator manages the communication devices 110 in units of groups according to its own operation policy, information regarding the groups can be included in the group information.

The information listed so far may be estimated by the communication control device 130 from other information provided from the communication device 110 without the communication device 110 providing the information to the communication control device 130. Specifically, for example, the guard band information can be estimated from the wireless interface information. In a case where the wireless interface used by the communication device 110 is E-UTRA or 5G NR, it can be estimated on the basis of the transmission bandwidth specification of E-UTRA described in 3GPP TS36.104, the transmission bandwidth specification of 5G NR described in 3GPP TS38.104, and tables described in TS38.104 illustrated below.

[Table 1]

| Table 5.6-1 Transmission bandwidth configuration NRB in E-UTRA channel bandwidths (CITED FROM TABLE 5.6-1 OF 3GPP TS36.104) | | | | | | |
|---|---|---|---|---|---|---|
| Channel bandwidth $BW_{Channel}$ [MHz] | 1.4 | 3 | 5 | 10 | 15 | 20 |
| Transmission bandwidth configuration $N_{RB}$ | 6 | 15 | 25 | 50 | 75 | 100 |

[Table 2]

| Table 5.3.3-1: Minimum guardband (kHz) (FR1) (CITED FROM TABLE 5.3.3-1 OF 3GPP TS38.104) | | | | | | | | | | | | | |
|---|---|---|---|---|---|---|---|---|---|---|---|---|---|
| SCS (kHz) | 5 MHz | 10 MHz | 15 MHz | 20 MHz | 25 MHz | 30 MHz | 40 MHz | 50 MHz | 60 MHz | 70 MHz | 80 MHz | 90 MHz | 100 MHz |
| 15 | 242.5 | 312.5 | 382. 5 | 452. 5 | 522.5 | 592. 5 | 552. 5 | 692. 5 | N. A | N. A | N. A | N. A | N. A |
| 30 | 505 | 665 | 645 | 805 | 785 | 945 | 905 | 1045 | 825 | 965 | 925 | 885 | 845 |
| 60 | N. A | 1010 | 990 | 1330 | 1310 | 1290 | 1610 | 1570 | 1530 | 1490 | 1450 | 1410 | 1370 |

[Table 3]

| Table 5.3.3-2: Minimum guardband (kHz) (FR2) (CITED FROM TABLE 5.3.3-2 OF 3GPP TS38.104) | | | | |
|---|---|---|---|---|
| SCS (kHz) | 50 MHz | 100 MHz | 200 MHz | 400 MHz |
| 60 | 1210 | 2450 | 4930 | N. A |
| 120 | 1900 | 2420 | 4900 | 9860 |

[Table 4]

| Table 5.3.3-3: Minimum guardband (kHz) of SCS 240 kHz SS/PBSH block (FR2) (CITED FROM TABLE 5.3.3-3 OF 3GPP TS38.104) | | | |
|---|---|---|---|
| SCS (kHz) | 100 MHz | 200 MHz | 400 MHz |
| 240 | 3800 | 7720 | 15560 |

In other words, it is sufficient that the communication control device 130 can acquire the information listed so far, and the communication device 110 is not necessarily required to provide the information to the communication control device 130. Furthermore, the intermediate device 130B (for example, a network manager) that bundles the plurality of communication devices 110 does not need to provide the information to the communication control device 130A. Providing information by the communication device 110 or the intermediate device 130B to the communication control device 130 or 130A is merely one means of information provision in the present embodiment. The information listed so far means information that can be necessary for the communication control device 130 to normally complete this procedure, and means for providing the information does not matter. For example, in WINNF-TS-0061, such a method is called multi-step registration and allowed.

Furthermore, as a matter of course, the information listed so far is selectively applicable depending on the local legal system and technical specifications.

<2.1.1.1 Supplement of Required Parameters>

In the registration procedure, in some cases, it is assumed that the device parameters related to not only the communication device 110 but also the terminal 120 are required to be registered in the communication control device 130. In such cases, the term "communication device" in the description given in <2.1.1> may be replaced with a term "terminal" or a similar term. Furthermore, parameters specific to "terminal", not described in <2.1.1>, may also be treated as required parameters in the registration procedure. For example, there is a user equipment (UE) category defined in 3GPP, and the like.

<2.1.2 Details of Registration Processing>

As described above, the communication device 110) representing the wireless system that intends to use the frequency band generates a registration request including the device parameter and notifies the communication control device 130 of the registration request.

Here, in a case where the installer information is included in the device parameters, the communication device 110 may perform tamper-proof processing or the like on the registration request by using the installer information. Furthermore, a part or all of the information included in the registration request may be subjected to encryption processing. Specifically, for example, a unique public key may be shared in advance between the communication device 110 and the communication control device 130, and the communication device 110 may encrypt information using a secret key corresponding to the public key. Examples of the encryption target include security sensitive information such as position information.

Note that there may be cases where the ID and the position information of the communication device 110 are disclosed, and the communication control device 130 holds in advance the ID and the position information of the main communication device 110 existing in its coverage. In such a case, since the communication control device 130 can acquire the position information from the ID of the communication device 110 that has transmitted the registration request, the position information does not need to be included in the registration request. Furthermore, it is also conceivable that the communication control device 130 returns necessary device parameters to the communication device 110 that has transmitted the registration request, and in response to this, the communication device 110 transmits a registration request including the device parameters necessary for registration. In this manner, the information included in the registration request may be different depending on the case.

After receiving the registration request, the communication control device 130 performs registration processing of the communication device 110 and returns a registration response according to a processing result. If there is no shortage or abnormality of information necessary for registration, the communication control device 130 records the information in an internal or external storage device and provides notification of normal completion. Otherwise, notification of a registration failure is provided. In a case where the registration is normally completed, the communication control device 130 may allocate an ID to each of the communication devices 110 and provide notification of such ID information at the time of response. In a case where the registration fails, the communication device 110 may provide notification of a revised registration request again. Furthermore, the communication device 110 may change the registration request and try the registration procedure until the normal completion.

Note that the registration procedure is sometimes executed even after the registration is normally completed. Specifically, for example, the registration procedure can be re-executed in a case where the position information is changed beyond a predetermined criterion due to movement, accuracy improvement, or the like. The predetermined criterion is typically determined by the legal system in each country or region. For example, in 47 C.F.R. Part 15 in the United States, a Mode II personal/portable white space device, that is, a device using a free spectrum is required to perform registration again in a case where its position changes by 100 meters or more.

<2.2 Available spectrum information query procedure (available spectrum query procedure)>

The available spectrum information query procedure is a procedure in which a wireless system that intends to use a frequency band inquires of the communication control device 130 for information regarding an available spectrum. Note that the available spectrum information query procedure does not necessarily need to be performed. Furthermore, the communication device 110 that makes an inquiry on behalf of the wireless system that intends to use the frequency band may be the same as or different from the communication device 110 that has generated the registration request. Typically, the communication device 110 that makes an inquiry notifies the communication control device 130 of a query request including information that can specify the communication device 110, and thereby the procedure is started.

Here, typically, the available spectrum information is information indicating a spectrum in which the communication device 110 can safely perform secondary use without giving fatal interference to the primary system.

The available spectrum information is determined, for example, on the basis of a secondary use prohibited area called an exclusion zone. Specifically, for example, in a case where the communication device 110 is installed in the secondary use prohibited area provided for the purpose of protecting the primary system using a frequency channel F1, the communication device 110 is not notified of the frequency channel F1 as an available channel.

The available spectrum information can also be determined, for example, by the degree of interference to the primary system. Specifically, for example, in a case where it is determined that fatal interference is given to the primary system even outside the secondary use prohibited area, such a frequency channel is not provided in notification as an available channel in some cases. An example of a specific calculation method is described in <2.2.2> described later.

Furthermore, as described above, there may be frequency channels that are not notified as available due to conditions other than primary system protection requirements. Specifically, for example, in order to avoid interference that may occur between the communication devices 110 in advance, there may be cases where a frequency channel being used by another communication device 110 existing in the vicinity of the communication device 110 is not notified as an available channel. In this manner, the available spectrum information set in consideration of interference with the other communication device 110 may be set as, for example, "use recommended spectrum information" and provided together with the available spectrum information. That is, the "use recommended spectrum information" is desirably a subset of the available spectrum information.

Even in a case of affecting the primary system, if the influence can be avoided by reducing the transmission power, the same spectrum as of the primary system or the communication device 110 in the vicinity may be notified as an available channel. In such a case, typically, maximum allowable transmission power information is included in the available spectrum information. The maximum allowable transmission power is typically expressed by EIRP. The maximum allowable transmission power is not necessarily limited thereto, and may be provided by, for example, a combination of conducted power and an antenna gain. Moreover, the antenna gain may be set to an allowable peak gain for each spatial direction.

<2.2.1 Details of required parameters>

As the information that can specify the wireless system that intends to use the frequency band, for example, unique information registered at the time of the registration procedure, the above-described ID information, and the like can be assumed.

Furthermore, the query request can also include query requirement information. The query requirement information can include, for example, information indicating a frequency band for which it is desired to know whether or not it is available. Furthermore, for example, the transmission power information can be included. The communication device 110 that makes an inquiry can include the transmission power information, for example, in a case where it is desired to know only spectrum information in which it is likely that desired transmission power can be used. The query requirement information does not necessarily need to be included in the query request.

The information indicating the frequency band may also include information indicating a format of the available spectrum information. In the IEEE 802.11 standard, a channel number is defined for each band. For example, a flag for requesting availability of a channel defined in such wireless interface technical specifications may be included. As another form, a flag for requesting availability of a unit spectrum range instead of the defined channel may be included. In a case where the unit spectrum is 1 MHz, the available spectrum information is requested for each spectrum range of 1 MHz. In a case where this flag is used, the desired unit spectrum information may be enclosed in the flag.

Furthermore, the query request can also include a measurement report. The measurement report includes results of measurement performed by the communication device 110 and/or the terminal 120. Some or all of the measurement results may be represented by raw data or may be represented by processed data. For example, standardized metrics represented by reference signal received power (RSRP), reference signal strength indicator (RSSI), and reference signal received quality (RSRQ) can be used for measurement.

<2.2.2 Details of available spectrum evaluation processing>

After receiving the query request, the available spectrum is evaluated on the basis of the query requirement information. For example, as described above, the available spectrum can be evaluated in consideration of existence of the primary system, the secondary use prohibited area thereof, and the communication device 110 in the vicinity.

The communication control device may derive the secondary use prohibited area. For example, in a case where the maximum transmission power $P_{MaxTx(dBm)}$ and the minimum transmission power $P_{MinTx(dBm)}$ are defined, it is possible to calculate the range of the separation distance between the primary system and the secondary system from the following expression and determine the secondary use prohibited area.

[Math. 2]

$$PL^{-1}\left(P_{MaxTx(\text{dBm})} - I_{Th(\text{dBm})}\right)_{(dB)} \leq d < PL^{-1}\left(P_{MinTx(\text{dBm})} - I_{Th(\text{dBm})}\right)_{(dB)}$$

$I_{Th(dBm)}$ is allowable interference power (a limit value of allowable interference power), d is a distance between a predetermined reference point and the communication device 110, and $PL()_{(dB)}$ is a function of a propagation loss. Therefore, the spectrum availability can be determined according to the positional relationship between the primary system and the communication device 110. Furthermore, in a case where transmission power information or power range information desired to be used by the communication device 110 is supplied in a request, the spectrum availability can be determined by calculating $PL^{-1}(P_{Tx(dBm)} - I_{Th(dBm)})$ and performing a comparison with the above-described range expression.

The maximum allowable transmission power information may be derived. Typically, the maximum allowable transmission power information is calculated by using allowable interference power information in the primary system or a protection zone thereof, position information of the reference point for calculating an interference power level suffered by the primary system, registration information of the communication device 110, and a propagation loss estimation model. Specifically, as an example, it is calculated by the following mathematical expression.

[Math. 3]

$$P_{MaxTx(\text{dBm})} = I_{Th(\text{dBm})} + PL(d)_{(\text{dB})} \qquad (2)$$

In Expression (2), the antenna gain in a transceiver is not included, but the antenna gain in the transceiver may be included according to the maximum allowable transmission power expression method (EIRP, conducted power, and the like) or the reception power reference point (antenna input point, antenna output point, and the like). Furthermore, a safety margin or the like for compensating for variation due to fading may be included. Furthermore, a feeder loss may be considered as necessary. Furthermore, it is possible to similarly perform calculation for an adjacent channel by adding the adjacent channel leakage ratio (ACRL) or an out-of-band emission maximum value.

Furthermore, Expression (2) is described on the basis of the assumption that the single communication device 110 is an interference source (single station interference). For example, in a case where it is necessary to consider aggregated interference from a plurality of communication devices 110 at the same time, a correction value may be added. Specifically, for example, the correction value can be determined on the basis of three types (fixed/predetermined, flexible, flexible minimized) of interference margin distribution methods disclosed in Non-Patent Document 3 (ECC Report 186).

Note that the allowable interference power information itself is not necessarily directly available as in Expression (2). For example, in a case where a required signal power-to-interference power ratio (SIR) of the primary system, a signal to interference plus noise ratio (SINR), and the like are available, they may be converted into allowable interference power and used. Note that such conversion processing is not limited to this processing, and may be applied to processing of other procedures.

Note that Expression 2 is expressed using logarithms, but as a matter of course, may be used by being converted into antilogarithms at the time of implementation. Furthermore, all parameters in logarithmic notation described in the present disclosure may be used by being appropriately converted into antilogarithms.

Furthermore, in a case where the above-described transmission power information is included in the query requirement information, the available spectrum can be evaluated by a method different from the above-described method. Specifically, for example, in a case where it is assumed that desired transmission power indicated by transmission power information is used, when an estimated interference quantity is less than allowable interference power in the primary system or a protection zone thereof, it is determined that the frequency channel is available, and the communication device 110 is notified of the frequency channel.

Furthermore, for example, in a case where an area or a space in which the communication device 110 can use the frequency band is determined in advance similarly to an area of a radio environment map (REM), the available spectrum information may be simply derived on the basis of only coordinates (coordinates or latitude, longitude, and ground level of the X axis, the Y axis, and the Z axis of communication device 110) included in the position information of the communication device 110. Furthermore, for example, even in a case where a lookup table that associates coordinates of a position of the communication device 110 with available spectrum information is prepared, the available spectrum information described above may be derived on the basis of only the position information of the communication device 110. As described above, there are various methods for the method of determining the available spectrum, and it is not limited to the example of the present disclosure.

Furthermore, in a case where the communication control device 130 acquires information regarding capability of a band extension technology such as carrier aggregation (CA) or channel bonding as the frequency band information supported by the communication device 110, the communication control device 130 may include an available combination, a recommended combination, or the like thereof in the available spectrum information.

Furthermore, in a case where the communication control device 130 acquires information regarding a combination of frequency bands supported by the dual connectivity and the multi connectivity as the frequency band information supported by the communication device 110, the communication control device 130 may include information such as an available spectrum and a recommended spectrum in the available spectrum information for the dual connectivity and the multi connectivity.

Furthermore, in a case of providing the available spectrum information for the band extension technology as described above, when the imbalance of the maximum allowable transmission power occurs between the plurality of frequency channels, the available spectrum information may be provided after adjusting the maximum allowable transmission power of each frequency channel. For example, from a perspective of primary system protection, the maximum allowable transmission power of each frequency channel may be aligned with the maximum allowable transmission power of a frequency channel having a low maximum allowable power flux density (power spectral density (PSD)).

The evaluation of the available spectrum does not necessarily need to be performed after the query request is received. For example, after normal completion of the above-described registration procedure, the communication control device 130 may independently perform the procedure without a query request. In such a case, an REM, a lookup table, or an information table similar to those described above as an example may be created.

Furthermore, the radio wave usage priority such as PAL or GAA may also be evaluated. For example, in a case where the registered device parameter or the query requirement includes information regarding the priority of radio wave use, it may be determined whether spectrum use is possible on the basis of the priority, and the notification may be made. Furthermore, for example, as disclosed in Non-Patent Document 2, in a case where information (in Non-Patent Document 2, it is referred to as a cluster list) regarding the communication device 110 that performs high priority use (for example, PAL) from the user is registered in the communication control device 130 in advance, evaluation may be performed on the basis of the information.

After the evaluation of the available spectrum is completed, the communication control device 130 notifies the communication device 110 of the evaluation result.

The communication device 110 may select a desired communication parameter by using the evaluation result received from the communication control device 130. In a case where a spectrum grant procedure (to be described later) is not employed, the communication device 110 may start radio wave transmission using the selected desired communication parameter as a communication parameter.

<2.3 Spectrum grant procedure>

The spectrum grant procedure is a procedure for the wireless system that intends to use the frequency band to receive the secondary use permission of the spectrum from the communication control device 130. The communication device 110 that performs the spectrum grant procedure as a representative of the wireless system may be the same as or different from the communication device 110 that has performed the procedures so far. Typically, the communication device 110 notifies the communication control device 130 of a spectrum grant request including information that can specify the communication device 110, thereby starting the procedure. Note that, as described above, the available spectrum information query procedure is not essential. Therefore, the spectrum grant procedure may be performed next to the available spectrum information query procedure, or may be performed next to a registration procedure.

In the present embodiment, it is assumed that at least the following two types of spectrum grant request methods can be used.

- Designation scheme
- Flexible scheme

The designation scheme is a request method in which the communication device 110 designates a desired communication parameter and requests the communication control device 130 to permit operation based on the desired communication parameter. Examples of the desired communication parameter include, but are not particularly limited to, a frequency channel to be used, a maximum transmission power, and the like. For example, a wireless interface technology specific parameter (such as a modulation scheme or a duplex mode) may be designated. Furthermore, information indicating radio wave usage priority such as PAL and GAA may be included.

The flexible scheme is a request method in which the communication device 110 designates only a requirement regarding a communication parameter and requests the communication control device 130 to designate a communication parameter that can be permitted for secondary use while satisfying the requirement. Examples of the requirement related to the communication parameter include, but are not particularly limited to, for example, a bandwidth, a desired maximum transmission power, or a desired minimum transmission power, and the like. For example, a wireless interface technology specific parameter (such as a modulation scheme or a duplex mode) may be designated. Specifically, for example, one or more TDD frame structures may be selected in advance and provided in notification.

Similarly to the query request, the spectrum grant request may also include the measurement report in either the designation scheme or the flexible scheme. The measurement report includes results of measurement performed by the communication device 110 and/or the terminal 120. The measurement may be represented by raw data or processed data. For example, standardized metrics represented by reference signal received power (RSRP), reference signal strength indicator (RSSI), and reference signal received quality (RSRQ) can be used for measurement.

Note that the scheme information used by the communication device 110 may be registered in the communication control device 130 at the time of the registration procedure described in <2.1>.

<2.3.1 Details of spectrum grant processing>

After receiving the spectrum grant request, the communication control device 130 performs spectrum grant processing on the basis of the spectrum grant request scheme. For example, using the technique described in <2.2>, it is possible to perform the spectrum grant processing in consideration of the primary system, the secondary use prohibited area, the existence of the communication device 110 in the vicinity, and the like.

In a case where the flexible scheme is used, the maximum allowable transmission power information may be derived using the method described in <2.2.2>. Typically, the maximum allowable transmission power information is calculated by using allowable interference power information in the primary system or a protection zone thereof, position information of the reference point for calculating an interference power level suffered by the primary system, registration information of the communication device 110, and a propagation loss estimation model. Specifically, as an example, it is calculated by the above Expression (2).

Furthermore, as described above, Expression (2) is described on the basis of the assumption that the single communication device 110 is an interference source. For example, in a case where it is necessary to consider aggregated interference from a plurality of communication devices 110 at the same time, a correction value may be added. Specifically, for example, the correction value can be determined on the basis of three types of methods (fixed/predetermined, flexible, flexible minimized) disclosed in Non-Patent Document 3 (ECC Report 186).

The communication control device 130 can use various propagation loss estimation models in the spectrum grant procedure, available spectrum evaluation processing for an available spectrum information query request, and the like. In a case where a model is designated for each application, it is desirable to use the designated model. For example, in Non-Patent Document 2 (WINNF-TS-0112), a propagation loss model such as Extended Hata (eHATA) or Irregular Terrain Model (ITM) is employed for each application. Of course, the propagation loss model is not limited thereto.

There are also propagation loss estimation models that require information regarding radio wave propagation paths. The information regarding the radio wave propagation path can include, for example, information indicating inside and outside of a line of sight (Line of Sight (LOS) and/or Non Line of Sight (NLOS)), topographical information (undulations, sea levels, and the like), environmental information (Urban, Suburban, Rural, Open Sky, and the like), and the like. When using the propagation loss estimation model, the communication control device 130 may estimate these pieces of information from the registration information of the communication device 110 or the information of the primary system that is already acquired. Alternatively, in a case where there is a parameter designated in advance, it is desirable to use the parameter.

In a case where the propagation loss estimation model is not designated in a predetermined application, the propagation loss estimation model may be selectively used as necessary. For example, when estimating the interference power to the other communication device 110, a model that is calculated with a small loss such as a free space loss model is used, but when estimating the coverage of the communication device 110, a model that is calculated with a large loss can be used.

Furthermore, in a case where the designated propagation loss estimation model is used, as an example, the spectrum grant processing can be performed by evaluating an interfering risk. Specifically, for example, in a case where it is assumed that desired transmission power indicated by transmission power information is used, when an estimated interference quantity is less than the allowable interference power in the primary system or a protection zone thereof, it is determined that use of the frequency channel can be permitted, and the communication device 110 is notified of the determination.

In any technique of the designation scheme and the flexible scheme, the radio wave usage priority such as PAL or GAA may also be evaluated similarly to the query request. For example, in a case where the registered device parameters or the query requirements include information regarding the radio wave usage priority, it may be determined whether or not it is possible to use a spectrum on the basis of the priority, and the notification may be made. Furthermore, for example, in a case where information regarding the communication device 110 that performs high priority use (for example, PAL) from the user is registered in the communication control device 130 in advance, evaluation may be performed on the basis of the information. For example, in Non-Patent Document 2 (WINNF-TS-0112), information regarding the communication device 110 is referred to as a cluster list.

Furthermore, in any calculation described above, the spectrum availability may be determined by performing correction of the position information or the coverage by using the positioning accuracy information (location uncertainty) when the position information of the communication device is used.

The spectrum grant processing is not necessarily performed due to reception of the spectrum grant request. For example, after the normal completion of the above-described registration procedure, the communication control device 130 may independently perform the spectrum grant processing without the spectrum grant request. Furthermore, for example, the spectrum grant processing may be performed at regular intervals. In such a case, the above-described REM, a lookup table, or information tables similar thereto may be created. Thus, the spectrum that can be permitted is determined only by the position information, and thus the communication control device 130 can quickly return a response after receiving the spectrum grant request.

<2.4 Spectrum use notification (spectrum use notification/heartbeat)>

The spectrum use notification is a procedure in which the wireless system using the frequency band notifies the communication control device 130 of the use of the spectrum based on the communication parameter allowed to be used in the spectrum grant procedure. The communication device 110 that performs the spectrum use notification as a representative of the wireless system may be the same as or different from the communication device 110 that has performed the procedures so far. Typically, the communication device 110 notifies the communication control device 130 of a notification message including information that can specify the communication device 110.

The spectrum use notification is desirably performed periodically until the use of the spectrum is rejected from the communication control device 130. In that case, the spectrum use notification is also referred to as a heartbeat.

After receiving the spectrum use notification, the communication control device 130 may determine whether to start or continue the spectrum use (in other words, radio wave transmission at the permitted spectrum). Examples of the determination method include confirmation of the spectrum use information of the primary system. Specifically, it is possible to determine permission or rejection of start or continuation of the spectrum use (radio wave transmission at the permitted spectrum) on the basis of a change in the use spectrum of the primary system, a change in a spectrum use situation of the primary system in which the use of radio waves is not steady (for example, a ship radar of CBRS in the United States), and the like. If the start or continuation is permitted, the communication device 110 may start or continue the spectrum use (radio wave transmission at the permitted spectrum).

After receiving the spectrum use notification, the communication control device 130 may command reconfiguration of communication parameters to the communication device 110. Typically, the reconfiguration of communication parameters can be commanded in a response of the communication control device 130 to the spectrum use notification. For example, information regarding recommended communication parameters (hereinafter, recommended communication parameter information) can be provided. The communication device 110 to which the recommended communication parameter information has been provided desirably performs the spectrum grant procedure described in <2.4> again using the recommended communication parameter information.

<2.5 Supplement of various procedures>

The various procedures described above do not necessarily need to be implemented individually, as described below. For example, two different procedures may be implemented by substituting a third procedure having roles of the two different procedures. Specifically, for example, the registration request and the available spectrum information query request may be integrally provided in notification. Furthermore, for example, the spectrum grant procedure and the spectrum use notification may be integrally performed. As a matter of course, it is not limited to these combinations, and three or more procedures may be performed integrally. Furthermore, as described above, one procedure may be separately performed a plurality of times.

Furthermore, the expression "acquisition" or an expression equivalent thereto in the present disclosure does not necessarily mean acquisition according to the procedure described in the present disclosure. For example, although it is described that the position information of the communication device 110 is used in the available spectrum evaluation processing, the information acquired in the registration procedure does not necessarily need to be used, and in a case where position information is included in an available spectrum query procedure request, this position information may be used. In other words, the procedure for acquisition described in the present disclosure is an example, and acquisition by other procedures is also permitted within the scope of the present disclosure and within the scope of technical feasibility.

Furthermore, the information described to be included in the response from the communication control device 130 to the communication device 110 may be actively provided in notification from the communication control device 130 by a push scheme if possible. As a specific example, the available spectrum information, the recommended communication parameter information, a radio wave transmission continuation rejection notification, and the like may be provided in notification by the push scheme.

<2.6 Various procedures for terminal>

So far, the description has been made mainly assuming the processing in the communication device 110A. However, in some embodiments, not only the communication device 110A but also the terminal 120 and the communication device 110B can operate under management of the communication control device 130. That is, a scenario in which the communication parameters are determined by the communication control device 130 is assumed. Even in such a case, basically, the respective procedures described in <2.1> to <2.4> can be used. However, unlike the communication device 110A, the terminal 120 and the communication device 110B need to use the spectrum managed by the communication control device 130 for the backhaul link, and cannot perform radio wave transmission without permission. Therefore, it is desirable to start backhaul communication for the purpose of accessing the communication control device 130 only after detecting a radio wave or an authorization signal transmitted by the communication device 110A (communication device 110 capable of providing wireless communication service or the communication device 110 as a master in a master-secondary system).

On the other hand, under the management of the communication control device 130, there may be cases where, also in the terminal or the communication device 110B, an allowable communication parameter is set for the purpose of protecting the primary system. However, the communication control device 130 cannot know the position information and the like of these devices in advance. Furthermore, these devices are also likely to have mobility. That is, the position information is dynamically updated. Depending on the laws, in a case where the position information changes by a certain amount or more, re-registration to the communication control device 130 may be required in some cases.

In consideration of such various use forms, operation forms, and the like of the terminal 120 and the communication device 110, in the operation form of the TVWS (Non-Patent Document 4) defined by the Office of Communications (Ofcom), the following two types of communication parameters are defined.

- Generic operational parameters
- Specific operational parameters

The generic operational parameters are communication parameters defined as "parameters that can be used by any slave WSD located within the coverage area of a predetermined master WSD (corresponding to the communication device 110)" in Non-Patent Document 4. A feature is that it is calculated by a WSDB without using the position information of the slave WSD.

The generic operational parameters can be provided by unicast or broadcast from the communication device 110 that is already permitted to perform radio wave transmission from the communication control device 130. For example, a broadcast signal represented by a contact verification signal (CVS) defined in Part 15 Subpart H of the FCC rule in the United States can be used. Alternatively, it may be provided by a broadcast signal specific to a wireless interface. Therefore, the terminal 120 and the communication device 110B can use the generic operational parameters as the communication parameters used for radio wave transmission for the purpose of accessing the communication control device 130.

The specific operational parameters are communication parameters defined as "parameters that can be used by a specific slave white space device (WSD)" in Non-Patent Document 4. In other words, they are communication parameters calculated using device parameters of the slave WSD corresponding to the terminal 120. A feature is that it is calculated by a white space database (WSDB) using the position information of the slave WSD.

The CPE-CBSD Handshake Procedure defined in Non-Patent Document 5 can be regarded as another form of the procedure related to the terminal. The CPE-CBSD does not have a wired backhaul line and accesses the Internet via the BTS-CBSD. Therefore, permission for radio wave transmission in the CBRS band cannot be acquired from a SAS without a special regulation or procedure. The CPE-CBSD Handshake Procedure allows the CPE-CBSD to perform radio wave transmission at the same maximum EIRP and the minimum necessary duty cycle as those of a terminal (EUD) until permission for radio wave transmission is acquired from the SAS. Accordingly, the communication device 110B can construct a line for acquiring permission for radio wave transmission from the communication control device 130 by setting the transmission EIRP to the maximum EIRP of the terminal and then performing wireless communication with the communication device 110A at the minimum necessary duty cycle. After the permission for the radio wave transmission is acquired, it is possible to use up to the maximum EIRP defined by the communication device within the range of the permission.

<2.7 Procedure occurring between communication control devices>

<2.7.1 Information exchange>

The communication control device 130 can exchange management information with another communication control device 130. At least the following information is desirably exchanged.

- Information related to communication device 110
- Area information
- Protection target system information

The information related to the communication device 110 includes at least the registration information and the communication parameter information of the communication device 110 operating under permission of the communication control device 130. The registration information of the communication device 110 having no permitted communication parameter may be included.

The registration information of the communication device 110 is typically the device parameters of the communication control device 130 registered in the communication device 110 in the above-described registration procedure. Not all of the registered information is necessarily exchanged. For example, information that may correspond to personal information does not need to be exchanged. Furthermore, when the registration information of the communication device 110 is exchanged, the registration information may be encrypted and exchanged, or the information may be exchanged after the content of the registration information is made obfuscated. For example, information converted into a binary value or information signed using an electronic signature mechanism may be exchanged.

The communication parameter information of the communication device 110 is typically information related to the communication parameters currently used by the communication device 110. At least information indicating the use spectrum and the transmission power is desirably included. Other communication parameters may be included.

The area information is typically information indicating a predetermined geographical region. This information can include region information of various attributes in various modes.

For example, as in a PAL protection area (PPA) disclosed in Non-Patent Document 2 (WINNF-TS-0112), protection zone information of the communication device 110 serving as a high priority secondary system may be included in the area information. The area information in this case can be expressed by, for example, a set of three or more coordinates indicating a geographical position. Furthermore, for example, in a case where a plurality of the communication control devices 130 can refer to a common external database, the area information is expressed by a unique ID, and the actual geographical region can be referred to from the external database using the ID.

Furthermore, for example, information indicating the coverage of the communication device 110 may be included. The area information in this case can also be expressed by, for example, a set of three or more coordinates indicating a geographical position. Furthermore, for example, assuming that the coverage is a circle centered on the geographical position of the communication device 110, the coverage can also be expressed by information indicating a size of a radius. Furthermore, for example, in a case where a plurality of the communication control devices 130 can refer to a common external database that records area information, the information indicating the coverage is expressed by a unique ID, and the actual coverage can be referred to from the external database using the ID.

Furthermore, as another aspect, information related to an area section determined in advance by the government or the like can also be included. Specifically, for example, it is possible to indicate a certain region by indicating an address. Furthermore, for example, a license area or the like can be similarly expressed.

Furthermore, as still another aspect, the area information does not necessarily express a planar area, and may express a three-dimensional space. For example, it may be expressed using a spatial coordinate system. Furthermore, for example, information indicating a predetermined closed space such as a floor number, a floor, and a room number of a building may be used.

The protection target system information is, for example, information of a wireless system treated as a protection target, such as the aforementioned existing layer (incumbent tier). Examples of the situation in which this information needs to be exchanged include, for example, a situation in which cross-border coordination is required. It is well conceivable that different protection targets exist in the same band between neighboring countries or regions. In such a case, the protection target system information can be exchanged between different communication control devices 130 in different countries or regions to which the communication control devices belong as necessary.

As another aspect, the protection target system information may include information of a secondary licensee and information of the wireless system operated by the secondary licensee. The secondary licensee is specifically a lessee of the license, and for example, it is assumed that the secondary licensee borrows PAL from the holder and operates the wireless system owned by itself. In a case where the communication control device 130 performs the rent management independently, information of the secondary licensee and information of the wireless system operated by the secondary licensee can be exchanged with another communication control device for the purpose of protection.

These pieces of information can be exchanged between the communication control devices 130 regardless of the decision-making topology applied to the communication control device 130.

Furthermore, these pieces of information can be exchanged in various schemes. Examples thereof will be described below.

- ID designation scheme
- Period designation scheme
- Region designation scheme
- Dump scheme

The ID designation scheme is a scheme in which an ID, given in advance to specify information managed by the communication control device 130, is used to acquire information corresponding to the ID. For example, it is assumed that a first communication control device 130 manages the communication device 110 with ID: AAA. At this time, a second communication control device 130 designates ID: AAA to the first communication control device 130 and makes an information acquisition request. After receiving the request, the first communication control device 130 searches for information of ID: AAA, and provides notification of information regarding the communication device 110 with ID: AAA, for example, registration information, communication parameter information, and the like as a response.

The period designation scheme is a scheme in which information satisfying a predetermined condition can be exchanged in a designated specific period.

Examples of the predetermined condition include the presence or absence of information update. For example, in a case where acquisition of information regarding the communication device 110 in the specific period is designated by a request, the registration information of the communication device 110 newly registered within the specific period can be provided in notification as a response. Furthermore, the registration information or the information of communication parameters of the communication device 110 whose communication parameters have been changed within the specific period can also be provided in notification as a response.

Examples of the predetermined condition include whether or not being recorded by the communication control device 130. For example, in a case where acquisition of information regarding the communication device 110 in the specific period is designated by a request, the registration information or the information of the communication parameters recorded by the communication control device 130 in the period can be provided in notification as a response. In a case where the information is updated in the period, the latest information in the period can be provided in notification. Alternatively, an update history for each piece of the information may be provided in notification.

In the region designation scheme, a specific region is designated, and information of the communication device 110 belonging to the region is exchanged. For example, in a case where acquisition of information regarding the communication device 110 in the specific region is designated by a request, the registration information or the information of the communication parameters of the communication device 110 installed in the region can be provided in notification as a response.

The dump scheme is a scheme of providing the entire information recorded by the communication control device 130. At least the information related to the communication device 110 and the area information are desirably provided by the dump scheme.

The above description of the information exchange between the communication control devices 130 is all based on a pull scheme. That is, a form in which information corresponding to a parameter designated in a request is responded is adopted, and as an example, implementation by the HTTP GET method is possible. However, information may be actively provided to another communication control device 130 by a push scheme without being limited to the pull scheme. As an example, the push scheme can be implemented by the HTTP POST method.

<2.7.2 Command or request procedure>

The communication control devices 130 may give a command or a request with each other. Specifically, as an example, there is reconfiguration of communication parameters of the communication device 110. For example, in a case where it is determined that the first communication device 110 managed by the first communication control device 130 is subject to great interference from the second communication device 110 managed by the second communication control device 130, the first communication control device 130 may request the second communication control device 130 to change communication parameters of the second communication device 110.

As another example, there is reconfiguration of the area information. For example, in a case where calculation of coverage information and protection zone information regarding the second communication control device 130 managed by the second communication device 110 is incomplete, the first communication control device 130 may request the second communication control device 130 to reconfigure the area information. Besides this, an area information reconfiguration request may be made for various reasons.

<2.8 Information transmission means>

A notification (signaling) between entities described so far can be implemented via various media. E-UTRA or 5G NR will be described as an example. As a matter of course, the present embodiment is not limited thereto at the time of implementation.

<2.8.2 Signaling between communication control device 130 and communication device 110>

The notification from the communication device 110 to the communication control device 130 may be performed, for example, in an application layer. For example, the Hyper Text Transfer Protocol (HTTP) may be used. Signaling can be performed by describing required parameters in a message body of the HTTP according to a predetermined manner. Moreover, in a case where the HTTP is used, the notification from the communication control device 130 to the communication device 110 is also performed according to an HTTP response mechanism.

<2.8.3 Signaling between communication device 110 and terminal 120>

The notification from the communication device 110 to the terminal 120 may be performed using, for example, at least one of radio resource control (RRC) signaling, system information (SI), or downlink control information (DCI). Furthermore, examples of a downlink physical channel include a physical downlink control channel (PDCCH), a physical downlink shared channel (PDSCH), a physical broadcast channel (PBCH), an NR-PDCCH, an NR-PDSCH, an NR-PBCH, and the like, but the downlink physical channel may be implemented using at least one of these.

The notification from the terminal 120 to the communication device 110 may be performed using, for example, radio resource control (RRC) signaling or uplink control information (UCI). Furthermore, it may be implemented by using an uplink physical channel (physical uplink control channel (PUCCH), physical uplink shared channel (PUSCH), physical random access channel (PRACH)).

The signaling is not limited to the above-described physical layer signaling, and the signaling may be performed at a higher layer. For example, at the time of implementation at the application layer, the signaling may be implemented by describing a required parameter in a message body of the HTTP according to a predetermined manner.

<2.8.4 Signaling between terminals 120>

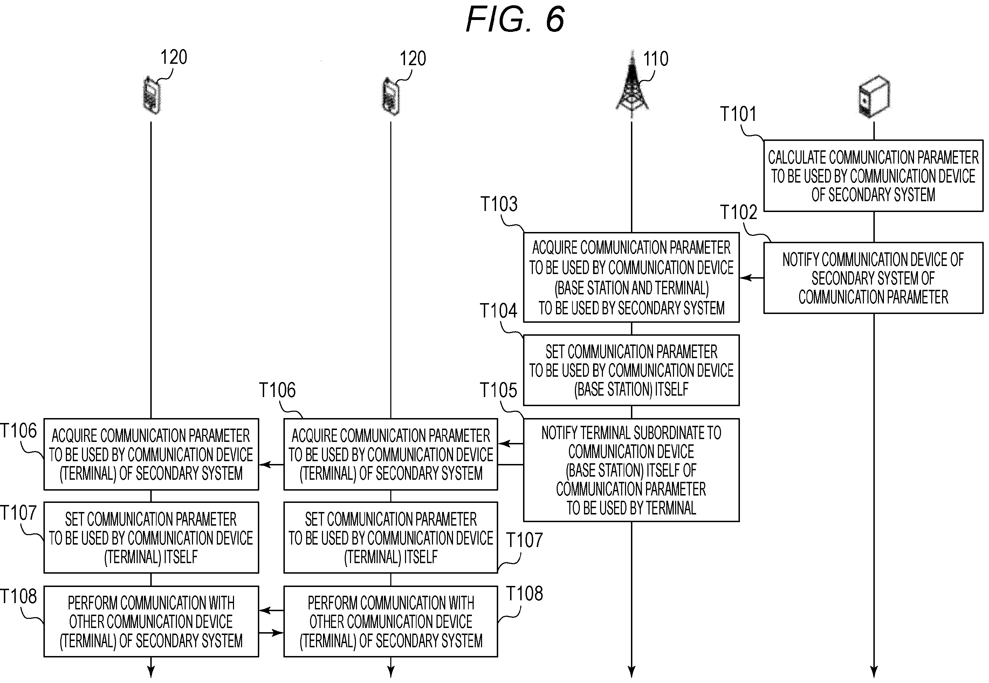

Fig. 6 illustrates an example of a flow of signaling in a case where device-to-device (D2D) or vehicle-to-everything (V2X), which is communication between the terminals 120, is assumed as communication of the secondary system. The D2D or V2X which is communication between the terminals 120 may be performed using a physical sidelink channel (a physical sidelink control channel (PSCCH), a physical sidelink shared channel (PSSCH), or a physical sidelink broadcast channel (PSBCH)). The communication control device 130 calculates a communication parameter to be used by the secondary system (T101) and notifies the communication device 110 of the secondary system of the calculated communication parameter (T102). A value of the communication parameter may be determined and provided in notification, or a condition indicating a range or the like of the communication parameter may be determined and provided in notification. The communication device 110 acquires the communication parameter to be used by the secondary system (T103), and sets the communication parameter that needs to be used by the communication device 110 itself (T104). Then, the terminal 120 is notified of a communication parameter to be used by the terminal 120 subordinate to the communication device 110 (T105). Each of the terminals 120 subordinate to the communication device 110 acquires (T106) and sets (T107) the communication parameter to be used by the terminal 120. Then, communication with another terminal 120 of the secondary system is performed (T108).

A communication parameter in a case where a target frequency channel for spectrum sharing is used in the sidelink (direct communication between the terminals 120) may be provided in notification, acquired, or set in a form associated with a resource pool for the sidelink in the target frequency channel. The resource pool is a radio resource for a sidelink set by a specific frequency resource or time resource. Examples of the frequency resource include a resource block, a component carrier, and the like. The time resource includes, for example, a radio frame, a subframe, a slot, a mini-slot, and the like. In a case where the resource pool is set in a frequency channel to be subjected to the spectrum sharing, the resource pool is set in the terminal 120 by the communication device 110 on the basis of at least one of the RRC signaling, the system information, or the downlink control information. Then, a communication parameter to be applied in the resource pool and the sidelink is also set in the terminal 120 by the communication device 110 on the basis of at least one of the RRC signaling, the system information, or the downlink control information from the communication device 110 to the terminal 120. The notification of setting of the resource pool and the notification of the communication parameter to be used in the sidelink may be performed simultaneously or individually.

<<3. Embodiments of present invention>>

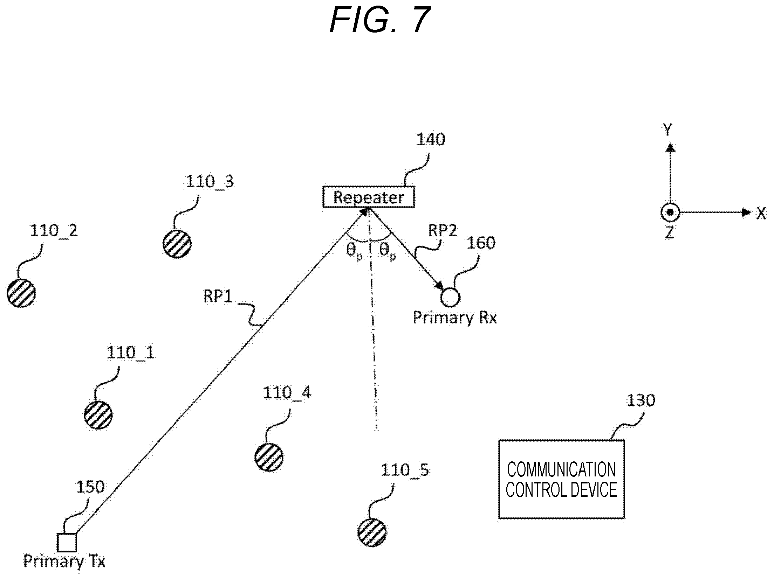

Fig. 7 is a diagram schematically illustrating, in a planar manner, a communication system (hereinafter, referred to as the present communication system) according to an embodiment of the present invention, a protection target system to be protected against radio wave interference from the communication system, and a repeater 140 used to relay radio waves in the protection target system. The protection target system corresponds to the primary system, and the present communication system corresponds to the secondary system.

The present communication system includes a plurality of communication devices 110_1 to 110_5 and a communication control device 130 that is one form of the information processing device according to the present embodiment. The protection target system includes a transmitter 150 that is a primary transmitter and a receiver 160 that is a primary receiver. The transmitter 150 transmits radio waves to the receiver 160 via the repeater 140.

The communication devices 110_1 to 110_5 will be each referred to as communication device 110 unless otherwise specified. The present communication system may further include a terminal device (not illustrated) (see the terminal device 120 in Fig. 1) that communicates with each communication device. Each communication device can wirelessly communicate with the terminal device and another communication device in the coverage. Furthermore, each communication device can communicate with the communication control device 130 in a wired or wireless manner.

The present communication system includes, as an example, a citizens broadband radio service device (CBSD) and a spectrum access system (SAS) used in citizens broadband radio service (CBRS) in the United States. In this case, the CBSD corresponds to the communication device 110, and SAS corresponds to the communication control device 130. As another example, the present communication system includes an automated frequency coordination (AFC) system in the 6 GHz band in the United States, a standard power access point (SPAP), and a fixed client device (FCD) (hereinafter, collectively referred to as standard power device (SPD)). In this case, the SPD corresponds to the communication device 110, and the AFC system corresponds to the communication control device 130.

The protection target system is a system to be protected against radio wave interference from the present communication system. In Fig. 7, the transmitter 150 is denoted by "Primary Tx" and the receiver 160 is denoted by "Primary Rx". The transmitter 150 in the protection target system emits (transmits) a radio wave including data or information addressed to the receiver 160. The transmitted radio wave is reflected by the repeater 140, and the reflected radio wave is received by the receiver 160. As described above, transmission from the transmitter 150 to the receiver 160 is performed using reflection at the repeater 140.

As an example, the repeater 140 is a rectangular repeater having a rectangular reflective surface with a width in the X-axis direction and a height in the Z-axis direction. Note that the repeater 140 may have a different shape. A radio wave incident on the repeater 140 at an incident angle (angle of incidence, AOI) $\theta_p$ is typically reflected at a reflection angle (angle of reflection, AOR) $\theta_p$ coincident with the incident angle. A wireless path RP1 of a radio wave (first radio wave) that is transmitted from the transmitter 150 and impinges on the repeater 140 and a wireless path RP2 of a reflected wave that is reflected by the repeater 140 and propagates to the receiver 160 are illustrated. The radio wave (first radio wave) transmitted from the transmitter 150 as described above is relayed to the receiver 160 by reflection at the repeater. The transmitter 150 and the receiver 160 are a transmitter and a receiver used in a fixed service. As another example, the transmitter 150 and the receiver 160 may be satellite and ground receiving stations used in a fixed satellite service (FSS). The transmitter 150 and the receiver 160 may be terrestrial communication equipment or may be non-terrestrial communication equipment (located inside or outside the atmosphere (space or the like)).

The repeater 140 is used to relay radio waves in a case where the required communication quality cannot be achieved due to radio waves being blocked by obstacles or the like between the transmitter 150 and the receiver 160. For example, the repeater 140 is used to avoid obstacles that block radio waves in a mountainous area or the like. The repeater 150 is a passive relay device also called a passive repeater. The repeater 150 is a relay device having no amplifier, and reflects radio waves using a metal plate or the like. The repeater 150 may be of another type as long as the repeater is a device that relays radio waves by reflection.

In the present embodiment, while the interference protection system (primary system) is protected against radio wave interference from the communication system (secondary system), the present communication system makes the secondary use of the spectrum used by the protection target system, thereby enhancing spectrum utilization efficiency.

For example, in the CBRS, a neighborhood area is defined around a receiver of the interference protection system. With the CBSD (communication device) installed in the neighboring area as an interference source, the SAS (communication control device) manages the secondary use of the spectrum of the communication device so as to cause a power interference quantity (quantity of aggregated power interference) at the receiver meets a criterion. Also in the present communication system, the communication control device 130 controls the use of the spectrum and transmission power of the communication device 110 so as to prevent the receiver 160 in the protection target system from receiving the quantity of interference exceeding the criterion (in a case where there is a plurality of communication devices that causes interference, quantity of aggregated interference caused by the plurality of communication device). At this time, in the present embodiment, the quantity of interference caused by the communication device 110 to affect the protection target system is calculated in consideration of the presence of the repeater 140. That is, the quantity of interference received by the receiver 160 is calculated in consideration of not only the quantity of interference caused by the radio wave transmitted from the communication device 110 to directly affect the receiver 160 (not via the repeater 140), but also the quantity of interference caused by the radio wave transmitted from the communication device 110 and reflected by the repeater 140 to affect the receiver 160. As described above, it is possible to protect, by managing the secondary use of radio waves (spectrum) in further consideration of the reflection at the repeater 140, the receiver 160 from interference in a suitable manner and improve spectrum utilization efficiency.

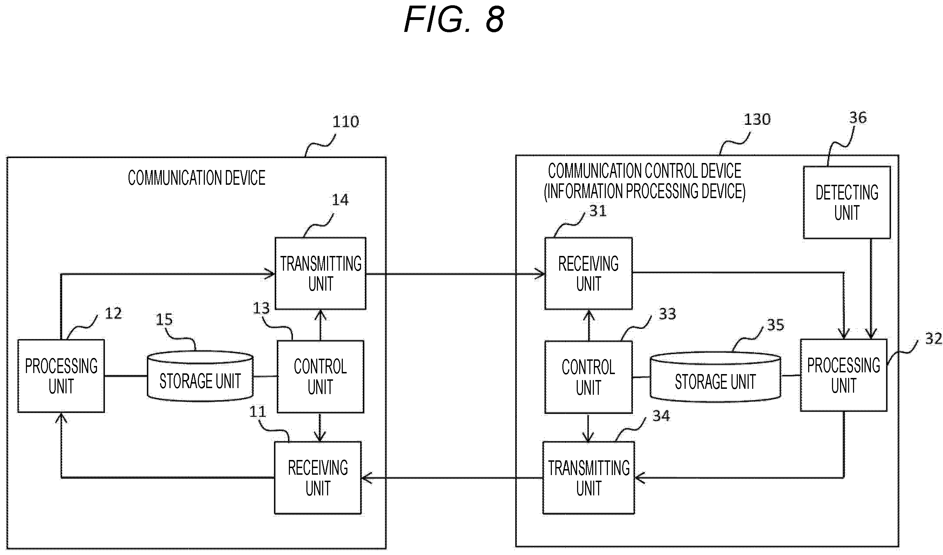

Fig. 8 is a block diagram of the communication device 110 and the communication control device 130. Although Fig. 8 illustrates one communication device 110, the communication devices 110_1 to 110_5 illustrated in Fig. 7 each have the configuration illustrated in Fig. 8.

The communication control device 130 includes a receiving unit 31, a processing unit 32, a control unit 33, a transmitting unit 34, a storage unit 35, and a detecting unit 36. The transmitting unit 34 and the receiving unit 31 each include at least one antenna. The transmitting unit 34 performs processing of transmitting a signal to the communication control device 130 and the other communication device 110 in a wireless or wired manner. The receiving unit 31 performs processing of receiving a signal from the communication device 110 and the other communication control device 130 in a wireless or wired manner. A pair of the transmitting unit 34 and the receiving unit 31 or any one of the transmitting unit 34 or the receiving unit 31 corresponds to a communication unit that communicates with the communication device 110. The control unit 33 controls the entire communication control device 130 by controlling each unit in the communication control device 130.

The storage unit 35 of the communication control device 130 stores information regarding the communication device 110, the repeater 140, the protection target system (the transmitter 150 and the receiver 160), and the other communication control device 130.

For example, the storage unit 35 stores information regarding the already-registered communication device 110 such as an ID, position information, maximum transmission power (EIRP capability value, maximum antenna power (maximum conducted power), and the like), beam pattern (beam movable range information), antenna transmission power (conducted power), and the like of the communication device 110. Furthermore, information regarding (a grant of) permission or non-permission of radio wave transmission for the communication device 110 may be stored in the storage unit 35. The information indicating permission may include information such as a spectrum (channel) permitted for use, a maximum transmission power value, and a beam pattern.

The storage unit 35 stores arrangement information regarding the repeater 140. The arrangement information includes, for example, information regarding the position, orientation, and size of the repeater 140. The position information regarding the repeater 140 may indicate a position represented by two-dimensional coordinates or three-dimensional coordinates. The position information regarding the repeater 140 may be information in any format as long as the positional relationship with the communication device 110 can be grasped. For example, in a case where the repeater 14 is a rectangular metal plate, the size information regarding the repeater 14 includes a width size (size in the X-axis direction) and a height size (size in the Z-axis direction), and may further include a thickness size (size in the Y-axis direction). The size information regarding the repeater 14 can be determined as appropriate in accordance with the configuration of the repeater 140. The orientation information regarding the repeater 140 includes, for example, information regarding the direction that the reflective surface (repeater surface) of the repeater 140 faces. In the example in Fig. 7, since the repeater surface faces the negative Y-axis direction, the orientation information regarding the repeater 140 may be stored as 180 degrees in a case where the positive Y-axis direction is set to 0 degrees.

The storage unit 35 stores information regarding the transmitter 150 and the receiver 160 as information regarding the protection target system. For example, the information regarding the transmitter 150 such as position information, a spectrum (frequency band) to be used, a transmission beam pattern, maximum transmission power, and antenna transmission power is stored. Furthermore, the storage unit 35 may store information regarding a period during which the protection target system is in operation (start time and end time), for example, a period during which the transmitter 150 performs radio wave transmission. Furthermore, in a case where the transmitter 150 is movable, information regarding a speed at which the transmitter 150 moves and a path on which the transmitter 150 moves may be stored. Moreover, in a case where the transmitter 150 is located in the air or can move in the air, altitude information may be stored. Furthermore, the storage unit 35 may store, as the information regarding the receiver 160, information such as position information, a receiving beam pattern, an antenna gain, and the like of the receiver 160. Furthermore, in a case where the receiver 160 is movable, information regarding a speed at which the receiver 160 moves and a path on which the receiver 160 moves may be stored. Moreover, in a case where the receiver 160 is located in the air or can move in the air, altitude information may be stored.

The detecting unit 36 detects a change in activity of the protection target system. Specifically, the detecting unit 36 detects the initiation of radio wave use by the protection target system, that is, radio wave transmission by the transmitter 150. In a case where the start of radio wave use by the protection target system is detected, the detecting unit 36 provides, to the processing unit 32, detection information (start detection information) indicating the start of radio wave use. The start detection information may include information indicating a spectrum in which the radio wave use is started, or in a case where a spectrum to be used is predetermined, the information indicating the spectrum need not be included in the start detection information. Furthermore, in a case where that the end of radio wave use by the protection target system is detected, that is, in a case where the end of radio wave transmission by the transmitter 150 is detected, the detecting unit 36 provides, to the processing unit 32, detection information (end detection information) indicating the end of radio wave use. The end detection information may include information regarding a spectrum in which the radio wave use has ended. In a case where a period during which the protection target system is in operation is predetermined, the detecting unit 36 may be omitted. Even in a case where information for making a notification of the initiation and end of the operation of the protection target system is received from an external device, the detecting unit 36 may be omitted.

The processing unit 32 manages or controls the secondary use of a spectrum for the communication device 110. The processing unit 32 receives a spectrum grant request from the communication device 110 and determines whether or not a spectrum is available. The processing unit 32 may grant permission to use the requested spectrum in a case where the requested spectrum is not used by the protection target system. A condition of the permission may be that the communication device 110 has the right to use the spectrum (for example, the PAL for the CBRS). In a case where the requested spectrum is used by the protection target system, the processing unit 32 may grant permission to use the spectrum as long as the quantity of interference affecting the protection target system is less than or equal to the allowable interference quantity of the receiver 160. Also in this case, a condition of the permission may be that the communication device 110 has the right to use the spectrum (for example, the PAL for the CBRS).

In a case of determining that the spectrum is available, the processing unit 32 determines the allowable maximum transmission power value for the communication device 110. In response to the grant request, the processing unit 32 transmits information indicating (the grant of) permission to use the requested spectrum to the communication device 110 together with a transmission parameter including the allowable maximum transmission power value. The processing unit 32 may grant permission to use the same spectrum to a plurality of communication devices 110. In this case, in a case where the quantity of aggregated interference caused by the plurality of communication devices 110 can be kept below the allowable interference quantity of the receiver 160, permission to use the spectrum may be granted to these communication devices 110. For the CBRS, the procedure of determining whether or not the requested spectrum is available and granting permission to use the spectrum described above may be performed in the available spectrum query procedure, the spectrum grant procedure, or the like described above.

At least while the protection target system is using a radio wave, the processing unit 32 performs processing of keeping the quantity of interference caused by the communication device 110 of the present communication system to affect the receiver 160 below the allowable interference quantity of the receiver 160 for the same spectrum as used by the protection target system (spectrum at least partially coincides with the spectrum used by the protection target system).

In the present embodiment, the quantity of interference affecting by the receiver 160 is calculated in consideration of not only the quantity of interference caused by the radio wave (first radio wave) transmitted from the communication device 110 to affect the receiver 160 directly, but also the quantity of interference caused by the radio wave transmitted from the communication device 110 and reflected by the repeater 140 to affect the receiver 160. Therefore, the processing unit 32 calculates, as the interference source region, a geographical region of the transmission source of a radio wave for determining whether or not the position of the communication device (second transmitter) that makes the secondary use of a spectrum that is the same as or adjacent to the spectrum used by the transmitter 150 (first transmitter) and the receiver 160 (first receiver) is a position where there is a possibility that the second radio wave transmitted from the second transmitter is reflected by the repeater 140 to cause interference affecting the receiver 160. For example, the interference source region is a geographical region where there is a possibility that, in a case where the communication device transmits a radio wave, the radio wave reflected by the repeater 140 interferes with the receiver 160. Note that the interference source region is not limited to a planar interference source region, and may be calculated and treated as a space in consideration of the height. Regardless of whether the interference source region is a planar region or a spatial region, the calculation of the interference source region can be determined without using installation information regarding the communication device or the like. It is only required that, for a radio wave transmitted from the interference source region, the quantity of interference affecting the receiver 160 be calculated in consideration of reflection at the repeater 140, and for a radio wave transmitted from outside the interference source region, the quantity of interference affecting the receiver 160 be calculated in consideration of only interference directly affecting the receiver 160. Note that the transmission destination of a radio wave transmitted from the communication device 110 includes the terminal device 120, the other communication device 110, the communication control device 130, or the like. The information regarding the interference source region can be used in controlling the secondary use of the spectrum of the communication device located in the interference source region or in determining a place to install the communication device in the interference source region. In the following description, it is mainly assumed that the information regarding the interference source region is used in controlling the secondary use of the spectrum of the communication device located in the interference source region, but the present embodiment is not limited to this application.

The processing unit 32 calculates, as the interference source region, on the basis of the position information regarding the receiver 160 and the arrangement information regarding the repeater 140 that relays a radio wave transmitted from the transmitter 150 to the receiver 160 by reflection, a geographical region where the position of the communication device (second transmitter) that makes the secondary use of the spectrum that is the same as or adjacent to the spectrum used by the receiver 160 and the transmitter 150 has a possibility of causing a radio wave (second radio wave) transmitted by the communication device and reflected by the repeater 140 to interfere with the receiver 160. For example, in a case where the communication device 110 is located in the interference source region, it is considered that there is a possibility that the radio wave transmitted from the communication device 110 and reflected by the repeater 140 to interfere with the receiver 160. The interference via the reflection also needs to be considered separately from the interference directly affecting the receiver 160 (not via the repeater 140) from the communication device 110 for the calculation of the quantity of interference affecting the receiver 160.

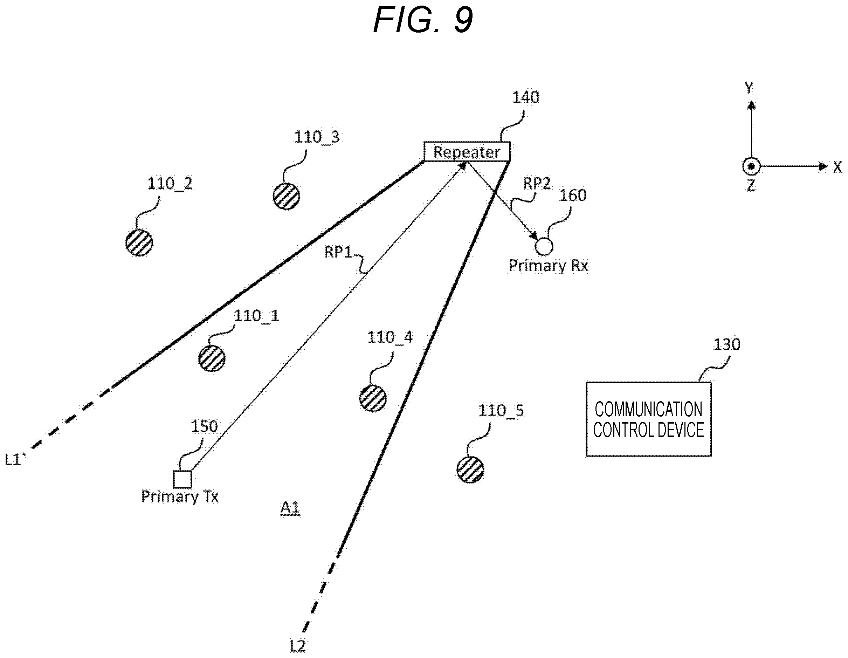

Fig. 9 illustrates an example of an interference source region A1 calculated for the protection target system (the transmitter 150, the receiver 160) in Fig. 7. The interference source region A1 is a region surrounded by a repeater surface, a line L1, and a line L2. Note that the lines L1 and L2 may be lines assumed to extend to infinity, or may be lines having a certain length from the repeater 140. The communication devices 110_1 and 110_4 are located in the interference source region A1. Therefore, when determining whether or not the same spectrum as used by the protection target system is used by or available for these communication devices 110(the communication device 110_1 and 110_4), it is necessary to consider the quantity of interference transmitted from the communication device 110 and reflected by the repeater 140 to affect the receiver 160 in addition to the quantity of interference directly affecting the receiver 160 for the calculation of the quantity of interference caused by the present communication system to affect the receiver 160. On the other hand, since the communication devices 110_2, 110_3, and 110_5 are located outside the interference source region A1, in a case where a determination is made as to whether or not the same spectrum as used by the protection target system is used by these communication devices 110 (110_2, 110_3, and 110_5) or whether or not the same spectrum is available, it is not necessary to consider interference caused by reflection at the repeater 140 to affect the receiver 160. It is only required to calculate the quantity of interference affecting the receiver 160 in consideration of only the quantity of interference directly affecting the receiver 160. The processing of calculating the interference source region will be described in detail later.

The processing unit 32 specifies, on the basis of information regarding the calculated interference source region and the position information regarding the communication device 110, the communication device 110 (first communication device) that is located in the interference source region and for which a determination is made as to whether or not the same spectrum as used by the protection target system is used or available. Furthermore, the processing unit 32 specifies a communication device 110 (second communication device) that is located outside the interference source region and for which a determination is made as to whether or not the same spectrum as used by the protection target system is used or available. In the following description, for the sake of simplicity, it is assumed that a determination is made as to whether or not the same spectrum as of the protection target system is used or available for any one of the communication devices 110_1 to 110_5; however, even in a case where there is a plurality of communication devices, it is possible to calculate the quantity of aggregated interference caused by the plurality of communication devices to affect the receiver 160.

The processing unit 32 determines, for the communication device 110, a transmission parameter that makes the quantity of interference caused by the communication device 110 specified inside the interference source region or the communication device 110 specified outside the interference source region to affect the receiver 160 less than or equal to the allowable interference quantity of the receiver 160. The processing unit 32 transmits the determined transmission parameter to the communication device 110 to cause the communication device 110 to transmit radio waves in accordance with the transmission parameter. As an example, the transmission parameter includes at least one of a maximum transmission power value, an antenna beam pattern, or whether or not radio wave transmission is enabled. In a case where there is a plurality of specified communication devices 110, it is only required to determine a transmission parameter that makes the quantity of aggregated interference caused by the plurality of communication devices 110 to affect the receiver 160 less than or equal to the allowable interference quantity of the receiver 160 for each communication device 110.

In a case where the communication device 110 inside the interference source region is specified as the communication device 110 for which a determination is made as to whether or not the same spectrum as of the protection target system is used or available, the processing unit 32 determines allowable transmission power (maximum transmission power) of the specified communication device 110. More specifically, the processing unit 32 calculates a propagation loss (path loss) of a path between the communication device 110 and the receiver 160 and a propagation loss (path loss) of a path between the communication device 110 and the repeater 140 on the basis of the position information regarding the communication device 110, and determines the allowable transmission power (maximum transmission power) of the specified communication device 110 on the basis of the calculated path losses, a propagation loss of a path between the repeater 140 and the receiver 160, an antenna gain of the receiver 160, and the allowable interference quantity of the receiver 160.

At this time, in a case where the antenna of the receiver 160 has directivity (receiving beam pattern), the processing unit 32 may calculate the propagation loss of the path between the communication device 110 and the receiver 160 on the basis of an antenna gain of the antenna of the receiver 160 with respect to the direction of the communication device 110. Similarly, the processing unit 32 may calculate the propagation loss of the path between the repeater 140 and the receiver 160 on the basis of an antenna gain of the antenna of the receiver 160 with respect to the direction of the repeater 140. A propagation loss calculated on the basis of an antenna gain with respect to a specific direction may be referred to as coupling loss. The processing unit 32 transmits a transmission parameter including a value indicating the maximum transmission power determined for the communication device 110 to the communication device 110 to cause the communication device 110 to transmit radio waves with the transmission power value in accordance with the transmission parameter.

On the other hand, in a case where the communication device 110 outside the interference source region is specified as the communication device 110 for which a determination is made as to whether or not the same spectrum as of the protection target system is used or available, the processing unit 32 determines allowable transmission power (maximum transmission power) of the specified communication device 110. More specifically, the processing unit 32 determines a propagation loss (path loss) of a path between the communication device 110 and the receiver 160 from the position information regarding the communication device 110, and determines allowable transmission power (maximum transmission power) of the communication device 110 on the basis of the path loss, the antenna gain of the receiver 160, and the allowable interference quantity of the receiver 160. In a case where the antenna of the receiver 160 has directivity (receiving beam pattern), the coupling loss may be calculated in a manner similar to the above.

Although the example where the processing unit 32 determines the allowable transmission power for the communication device 110 inside the interference source region and the communication device outside the interference source region has been described above, it is also possible to calculate, in a similar manner, allowable maximum transmission power for transmission from any point inside the interference source region and any point outside the interference source region.

The processing unit 32 may determine an exclusion zone or a restricted zone, which is a zone where radio wave transmission is restricted, in association with a transmission power limit value for each zone on the basis of the allowable interference quantity of the receiver 160. That is, a zone having the allowable maximum transmission power value set therefor is determined to be the exclusion zone such that the larger the distance from the receiver 160, the larger the allowable transmission power value. At this time, for the point inside the interference source region, for example, the allowable maximum transmission power can be determined on the basis of a propagation loss of a path between a point from which a radio wave is transmitted and the receiver 160, a propagation loss of a path between the point and the repeater 140, the propagation loss of the path between the repeater 140 and the receiver 160, the antenna gain of the receiver 160, and the allowable interference quantity of the receiver 160. For the point outside the interference source region, the allowable maximum transmission power can be determined on the basis of a propagation loss of a path between a point from which a radio wave is transmitted and the receiver 160, the antenna gain of the receiver 160, and the allowable interference quantity of the receiver 160. The use of the method for determining the maximum allowable transmission power for any points inside and outside the interference source region as described above makes it possible to determine the exclusion zone where radio wave transmission is restricted for each point in association with the transmission power limit value (maximum transmission power value for each zone). It is possible to determine, by determining the exclusion zone, whether or not a spectrum is available for the communication device located at any point and the maximum allowable transmission power in a case where permission to use the spectrum is granted. Specific processing of determining the exclusion zone will be described later.

In addition to the processing performed by the processing unit 32 described above, processing performed by the communication control device 130 in the following description of the present embodiment is also performed by the processing unit 32 of the communication control device 130.

The communication device 110 includes a receiving unit 11, a processing unit 12, a control unit 13, a transmitting unit 14, and a storage unit 15. The transmitting unit 14 and the receiving unit 11 each include at least one antenna. The transmitting unit 14 performs processing of transmitting a signal to the communication control device 130 and the other communication device 110 in a wireless or wired manner. The receiving unit 11 performs processing of receiving a signal from the communication control device 130 or the other communication device 110 in a wireless or wired manner. The control unit 13 controls the entire communication device 110 by controlling each element in the communication device 110. For example, in a case where beamforming is performed by the transmitting unit 14, the control unit 13 may control beamforming for the transmitting unit 14. Note that the transmitting unit 13 may perform omnidirectional transmission (omni transmission) instead of directional transmission. A pair of the receiving unit 11 and the transmitting unit 14 or any one of the receiving unit 11 or the transmitting unit 14 corresponds to a communication unit that communicates with the communication control device 130.

In the storage unit 15 of the communication device 110, information regarding the communication control device 130 or the other communication device 110 is stored in advance. Furthermore, the storage unit 15 stores information regarding various types of performance, specifications, and the like of the communication device 110. For example, the storage unit 15 stores information such as an ID, position information, maximum transmission power information (EIRP capability value, maximum antenna power (maximum conducted power), and the like), dynamic beam pattern information (beam movable range information), antenna transmission power (conducted power) of the communication device 110, and the like. Information regarding to (a grant of) permission or non-permission of radio wave transmission for the communication device 110 issued by the communication control device 130 may be stored in the storage unit 15. The information indicating permission may include information such as a spectrum (channel) permitted for use, a maximum transmission power value, and a beam pattern.

The processing unit 12 transmits and receives data or information to and from another device such as the terminal device 120, the other communication device 110, or the communication control device 130. For example, in a case where the communication device 110 is a CBSD specified in the CBRS, the processing unit 12 requests the communication control device 130 to grant permission to use a spectrum on the basis of the PAL or the like. In a case where (the grant of) permission to use the requested spectrum is issued by the communication control device 130, the processing unit 12 performs transmission/reception communication of data or information with another device on the basis of the grant. In addition to the processing performed by the processing unit 12 described above, processing described as being performed by the communication device 110 in the following description of the present embodiment is performed by the processing unit 12.

Each processing block of the communication control device 130 and the communication device 110 is configured by a hardware circuit, software (program or the like), or both of them. The storage unit 35 and the storage unit 15 are configured by any storage device such as a memory device, a magnetic storage device, or an optical disc. The storage unit 35 and the storage unit 15 need not necessarily be in the communication control device 130 and the communication device 110, and may be externally connected to the communication control device 130 and the communication device 110 in a wired or wireless manner. The transmitting unit 34 and the receiving unit 31 in the communication control device 130 and the transmitting unit 14 and the receiving unit 11 in the communication device 110 may include one or a plurality of network interfaces according to the number or types of connectable networks.

Hereinafter, the present embodiment will be described in more detail using specific examples.

[Calculation Example 1 of interference source region]

An example (Calculation Example 1) where the processing unit 32 of the communication control device 130 calculates an interference source region with respect to the receiver 160 of the protection target system will be described. In Calculation Example 1, the interference source region is calculated on the basis of the incident angle of the radio wave incident on the repeater 140. In the following description, it is assumed that there is only one repeater, but two or more repeaters may be present. In this case, the same processing as in a case where there is only repeater may be performed for each repeater. Furthermore, in the present example, it is assumed that the repeater is a rectangular repeater, but even for a different type of repeater, it is possible to calculate the interference source region by applying the present embodiment.

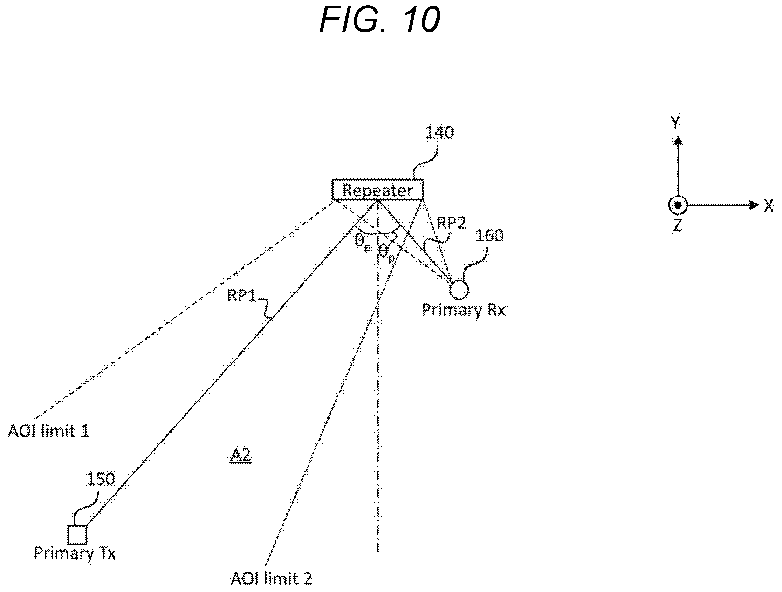

Fig. 10 illustrates an example where the interference source region is calculated on the basis of the incident angle of the radio wave incident on the repeater 140. Neither the communication control device 130 nor the communication device 110 is illustrated, and the repeater 140, the transmitter 150, and the receiver 160 are illustrated in a planar manner. In a case where a radio wave (second radio wave) is transmitted from any point in the region, the processing unit 32 of the communication control device 130 calculates the interference source region on the basis of the incident angle of the transmitted radio wave incident on the repeater 140 and the reflection angle of the radio wave reflected by the repeater 140. For example, a transmission source region (geographical range) in a case where the reflected radio wave is received by the receiver 160 is determined to be the interference source region. For example, a boundary of the interference source region can be calculated, and a region inside the boundary can be determined to be the interference source region. Transmission of a radio wave from the any point means a case where it is assumed that an entity such as a communication device is located at the point, and a radio wave is transmitted from the entity located at the point.

Typically, the incident angle (angle of incidence, AOI) of the radio wave incident on the repeater 140 coincides with the reflection angle (angle of reflection) of the radio wave reflected by the repeater 140. Therefore, the incident radio wave is determined on the basis of limit angles (AOI limit 1 and AOI limit 2 illustrated in Fig. 10) of the incident angle at which the incident radio wave is reflected at the reflection angle coincident with the incident angle and is received as interference by the receiver 160. A radio wave emitted from a region surrounded by a range of these limit angles reaches the receiver 160 as interference via the repeater 140. Therefore, the region surrounded by the range of these limit angles is determined to be an interference source region A2. These limit angles correspond to the boundary of the interference source region A2. Among the interference source regions determined as described above, only a region in which the quantity of power (quantity of interference) received as interference by the receiver 160 is larger than a threshold (allowable value) may be specified, and the specified region may be set as the interference source region.

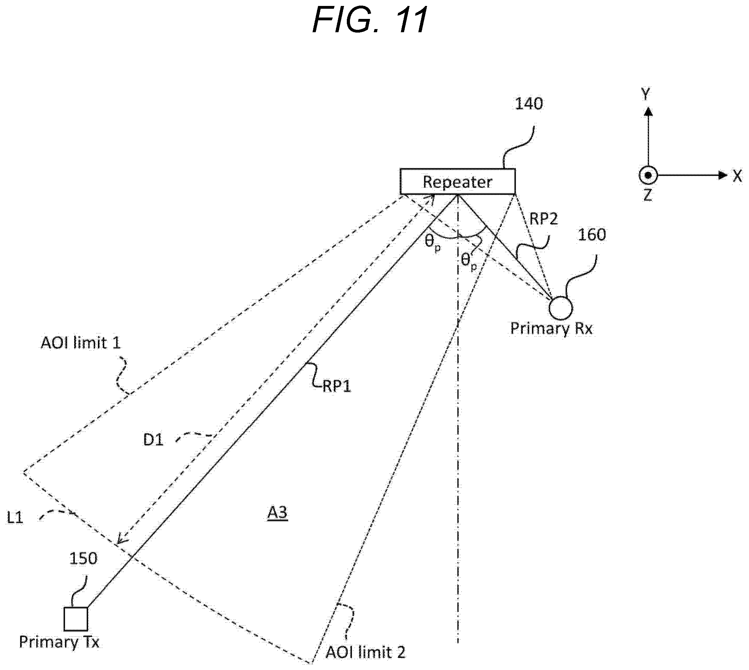

Fig. 11 illustrates another example of calculating the interference source region. The interference source region calculated in the example in Fig. 10 is narrowed down to a smaller region on the basis of the distance from the repeater 140. For example, a limit distance from the repeater 140 is determined, and the interference source region is specified within a range less than or equal to the limit distance from the repeater 140. In the example in Fig. 10, the limit distance in the direction of a certain incident angle is indicated by D1. For example, for each position at regular intervals in the X-axis direction from a position in the repeater surface corresponding to the AOI limit 1 to a position in the repeater surface corresponding to the AOI limit 2, a limit distance is set in the direction of the incident angle that causes the direction of the reflection angle to point toward the receiver 160. In the interference source region A2 calculated in the example in Fig. 10, a range up to such limit distances in the direction of the incident angle is defined as an interference source region A3. In the example in Fig. 10, a line connecting the ends of the limit distance in the direction of the incident angle is indicated by a line L1. Therefore, a region surrounded by the AOI limit 1, the AOI limit 2, and the line L1 is the interference source region A3.

The limit distance can be determined on the basis of the radio wave transmission power value. Moreover, the limit distance may be determined using the distance between the repeater 140 and the receiver 160. Moreover, the gain of the repeater 140 may be used. For example, when a radio wave is transmitted at the maximum transmission power value that can be used, the limit of the distance at which the intensity of the radio wave received by the receiver 160 due to reflection exceeds the threshold may be set as the limit distance. Note that the limit distance may be a predetermined specific value regardless of the radio wave transmission power value.

In the example illustrated in Figs. 10 and 11, the two-dimensional interference source region has been described in consideration of only the horizontal direction (the X-axis direction and the Y-axis direction). In a case where three-dimensional reflection of a radio wave at the repeater 140 is taken into consideration, the interference source region may be calculated as a three-dimensional space in consideration of the vertical direction (Z-axis direction).

Calculation Example 1 described with reference to Figs. 10 and 11 is also applicable to repeaters other than the passive repeater as long as, for example, the incident angle (angle of incidence, AOI) and the reflection angle (angle of reflection) coincide with each other or have a certain relationship with respect to a reconfigurable intelligent surface (RIS) or the like. Note that the reconfigurable intelligent surface (RIS) is a metasurface device in which elements for electrically switching a phase are arranged on a surface of a reflector to adaptively change a reflection direction. Furthermore, in a case where there is a plurality of repeaters, the interference source region can be calculated for each repeater by Calculation Example 1. A passive repeater and an RIS may be coexist. Interference source regions calculated for the passive repeater and the RIS may be combined to be the interference source region.

[Calculation Example 2 of interference source region]

An example (Calculation Example 2) where the processing unit 32 of the communication control device 130 calculates an interference source region with respect to the receiver 160 of the protection target system will be described. In Calculation Example 1 described above, the interference source region is calculated on the assumption that a radio wave is reflected at the reflection angle coincident with the incident angle, but in Calculation Example 2, the interference source region calculated in Calculation Example 1 is enlarged by taking sidelobes of the radio wave reflected by the repeater 140 into consideration. Due to the nature of radio waves, the reflected radio wave may be reflected in not only the direction of the reflection angle (angle of reflection) coincident with the incident angle but also other directions. In the description of the present embodiment, a radio wave reflected in a different direction may be referred to as sidelobes, and a radio wave reflected in the direction of the reflection angle coincident with the incident angle may be referred to as main lobe. In Calculation Example 1, only the reflected wave corresponding to the main lobe is taken into consideration, but in Calculation Example 2, the interference source region is calculated with the sidelobes further taken into consideration. Specifically, the interference source region is enlarged by combining the interference source region calculated on the basis of the sidelobes with the interference source region calculated in Example 1.

Note that the interference source region calculated on the basis of the sidelobes may be used alone as the interference source region without being combined with the interference source region calculated on the basis of the main lobe. That is, the interference source region may be calculated only on the basis of the sidelobes without considering the main lobe. For example, it is known that interference affecting the receiver 160 is within the allowable range due to an obstacle or the like in the direction of the main lobe, but interference exceeding the allowable value may affect the receiver 160 in the direction of the sidelobes. In this case, a method for calculating the interference source region only on the basis of the sidelobes is also effective.

In Calculation Example 2, the processing unit 32 calculates sidelobes of a radio wave transmitted from any point and reflected by the repeater 140. The processing unit 32 determines whether the point is to be included in the interference source region on the basis of the value of the sidelobes in the direction from the repeater 140 to the receiver 160. For example, the processing unit 32 sets a point where the value of the sidelobes is greater than the threshold as a point to be included in the interference source region. As described above, the processing unit 32 calculates the interference source region by using a method for determining whether or not any point is to be included in the interference source region on the basis of the value of the sidelobes of the reflected wave. For example, a boundary of the interference source region is calculated, and a region inside the boundary is determined to be the interference source region. Alternatively, the processing unit 32 may obtain a set of points to be included in the interference source region and set a region including the set of points as the interference source region. As an example, the processing unit 32 divides the target region into meshes, each mesh or the center of each mesh being regarded as a point, and determines whether or not the point is to be included in the interference source region. The processing unit 32 sets a set of the determined points as the interference source region.

As an application of the above-described method using the sidelobe, the processing unit 32 calculates an envelope of the calculated sidelobes. The processing unit 32 may determine whether or not the point is to be included in the interference source region on the basis of the value of the envelope in the direction from the repeater 140 to the receiver 160. For example, the processing unit 32 sets a point where the value of the envelope is greater than a threshold as a point to be included in the interference source region. As described above, the processing unit 32 calculates the interference source region for any point by using a method for determining whether or not the point is to be included in the interference source region on the basis of the value of the envelope. For example, a boundary of the interference source region is calculated, and a region inside the boundary is determined to be the interference source region. Alternatively, the processing unit 32 may obtain a set of points to be included in the interference source region and set a region including the set of points as the interference source region. As an example, the processing unit 32 divides the target region into meshes, each mesh or the center of each mesh being regarded as a point, and determines whether or not the point is to be included in the interference source region. The processing unit 32 sets a set of meshes including the determined point as the interference source region.

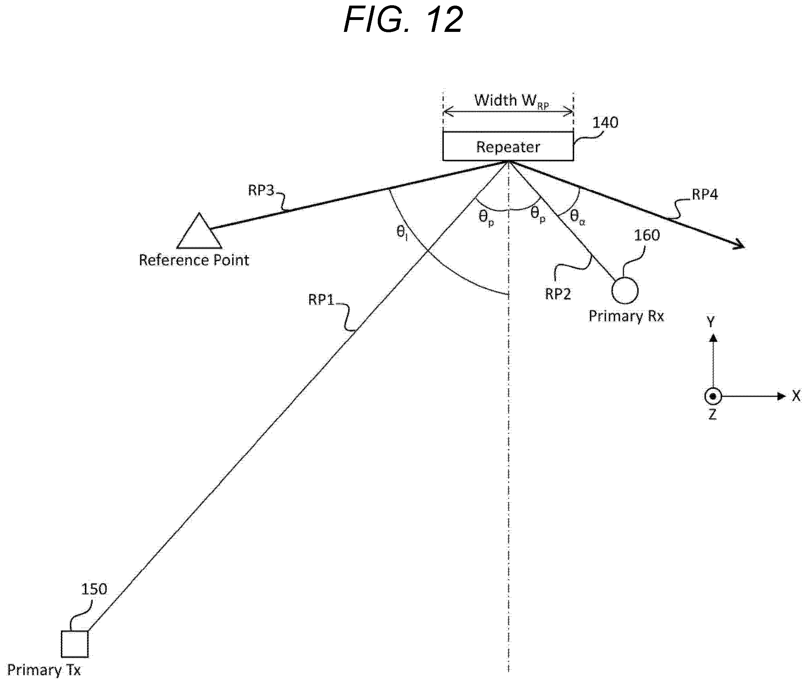

Fig. 12 is a diagram illustrating a specific example of Calculation Example 2 of the interference source region. Neither the communication control device 130 nor the communication device 110 is illustrated, and the repeater 140, the transmitter 150, and the receiver 160 are illustrated in a planar manner. Neither the AOI limit 1 nor the AOI limit 2 calculated in Calculation Example 1 is illustrated. Any point is set as a reference point (interference point candidate), and it is determined whether or not the reference point is included in the interference source region.

In a manner similar to Calculation Example 1, it is assumed that the reflective surface (repeater surface) of the repeater 140 is rectangular. The horizontal width of the repeater surface is denoted by $W_{RP}$, and the height (vertical width) in the Z-axis direction is denoted by H. An incident angle of a radio wave from the point is denoted by $\theta_I$. A wireless path of the radio wave from the point is denoted by RP3, and a wireless path of a radio wave reflected at a reflection angle coincident with the incident angle is denoted by RP4. A relative angle between the reflection direction as viewed from the incident position on the repeater 140 and the direction of the receiver 160 is denoted by $\theta_\alpha$.

Sidelobes u in the direction of the receiver 160 of the reflected wave can be calculated by the following Expression (3) (see Non-Patent Document 1).

[Math. 4]

$$u = \pi \frac{W_{RP} \cos \theta_I}{\lambda} \sin \theta_\alpha \qquad (3)$$

An envelope of the sidelobes can be calculated by the following Expression (4).

$$U = 20 \log_{10}(u) \qquad (4)$$

Note that, in the near field, the directivity changes with the distance. Therefore, the near-field correction of the sidelobes may be performed in accordance with the positional relationship between the repeater 140 and the receiver 160, and Expressions (3) and (4) may be used.

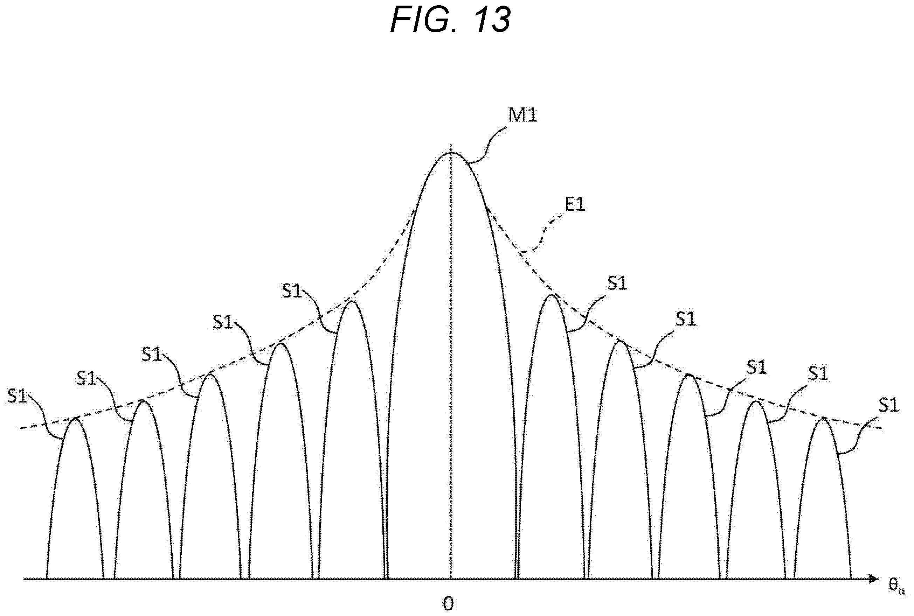

Fig. 13 schematically illustrates each sidelobe S1 of the reflected wave at the repeater 140 and an envelope E1 of these sidelobes S1. A center waveform corresponds to a main lobe M1 (the waveform of a radio wave reflected at the reflection angle coincident with the incident angle), and a waveform spreading to both sides other than the main lobe corresponds to sidelobes S1. The horizontal axis is denoted by $\theta_\alpha$, and $\theta_\alpha$ of the main lobe M1 is zero.

A predetermined envelope value serving as a threshold is denoted by as $U_{Th}$. At this time, in a case where $U_{Th} < U$ is satisfied, it is determined that there is a possibility that the reflected wave of the radio wave transmitted from the point interferes with the receiver 160 (there is a possibility of causing interference greater than or equal to the allowable value), and the point is determined to be included in the interference source region. The reflected wave interfering with the receiver 160 means that the reflected wave is at a power level that cannot be ignored when the interference quantity of the receiver 160 is calculated. The processing unit 32 can determine the interference source region for the receiver 160 by using the method for determining whether or not a point is to be included in the interference source region as described above. For example, a set of points satisfying $U_{Th} < U$ is calculated, and a region including the set of points is set as the interference source region. Alternatively, a boundary line satisfying $U_{Th} < U$ is calculated, and the inside of the boundary line is set as the interference source region.

Note that even in a case where the envelope value satisfies $U_{Th} < U$, the envelope value may correspond to a small sidelobe value between two adjacent sidelobes S1 (see Fig. 13). In this case, even if a radio wave is transmitted from the point, the radio wave does not interfere with the receiver 160, and the point need not be originally included in the interference source region. There is, however, an advantage that the use of the envelope allows easy and quick determination of the interference source region. On the other hand, in a case where the interference source region is determined on the basis of the sidelobes without using the envelope, the interference source region can be determined more accurately, but a plurality of small interference source regions is interspersed, which makes calculation complicated. In order to determine the interference source region, switching between the use of the envelope and the use of the sidelobes without using the envelope may be made according to the purpose.

In the description of the example illustrated in Fig. 12, the two-dimensional interference source region is calculated in consideration of only the horizontal direction (the X-axis direction and the Y-axis direction). In a case where three-dimensional reflection of a radio wave at the repeater 140 is taken into consideration, the interference source region may be calculated as a three-dimensional space in consideration of the vertical direction (Z-axis direction).

In the description of the example illustrated in Fig. 12, the interference source region is calculated on the basis of the envelope, but the interference source region may be calculated on the basis of the sidelobes instead of the envelope. For example, a predetermined sidelobe value serving as a threshold is denoted by $u_{th}$. At this time, in a case where $u_{th} < u$ is satisfied, it is determined that there is a possibility that the reflected wave of the radio wave transmitted from the point interferes with the receiver 160, and the point is determined to be included in the interference source region. The processing unit 32 can determine the interference source region for the receiver 160 by using the method for determining whether or not a point is to be included in the interference source region as described above. For example, a set of points satisfying $u_{th} < u$ is calculated, and a region including the set of points is set as the interference source region. Alternatively, a boundary line satisfying $u_{th} < u$ is calculated, and the inside of the boundary line is set as the interference source region.

The processing unit 32 can enlarge the interference source region by combining the interference source region calculated by the method described in Calculation Example 2 and the interference source region calculated in Calculation Example 1. It is therefore possible to manage the secondary use of a spectrum more appropriately while protecting the

EP 4 518 199 A1

protection target system from interference.

[Calculation Example 3 of interference source region]

When a radio wave is reflected by the repeater 140, a propagation loss (repeater loss) occurs. The amount of loss is determined by:

- effective area of the repeater 140 visible from point (interference point candidate);
- frequency of radio wave; and
- relative angle between reflection direction viewed from incident position on the repeater 140 and direction of the receiver 160.

That is, depending on the position of the point, it is also assumed that the reflected radio wave causes, due to the repeater loss, only interference negligible for the receiver 160. Therefore, a threshold of the repeater loss is determined, and a point where the loss is less than or equal to the threshold is included in the interference source region. That is, a point where the gain (repeater gain) of the repeater 140 is greater than or equal to the threshold is included in the interference source region. In Calculation Example 3, the processing unit 32 of the communication control device 130 calculates the gain of the repeater 140 on the basis of the incident angle of the radio wave transmitted from the point to the repeater 140, and calculates the interference source region on the basis of the calculated value of the gain. For example, the processing unit 32 sets a region in which the value of the gain is greater than the threshold as the interference source region. Calculation Example 3 can be applied to both Calculation Example 1 and Calculation Example 2 described above. In the following description, it is assumed that whether or not the radio wave (main lobe) reflected at the reflection angle coincident with the incident angle causes interference is determined on the basis of the repeater gain, and whether or not the point is included in the interference source region is determined.

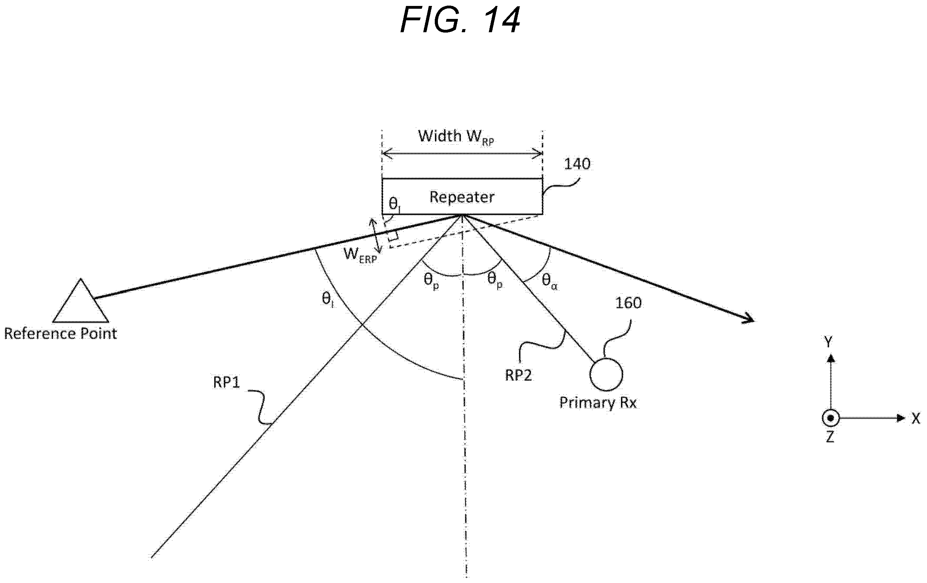

Fig. 14 is a diagram illustrating a specific example of Calculation Example 3 of the interference source region. None of the devices such as the communication control device 130, the communication device 110, and the transmitter 150 are illustrated, and the repeater 140 and the receiver 160 are illustrated in a planar manner. The same components as described in Fig. 12 are denoted by the same reference numerals, and a detailed description thereof will be omitted. In a manner similar to Calculation Example 2, it is assumed that the repeater surface is rectangular.

Any point is set as an interference point candidate (reference point), and it is determined whether or not the point is included in the interference source region.

When the repeater 140 is considered as an antenna, an antenna effective area Ae is determined by an effective width $W_{ERP}$ of the repeater surface and the height H of the repeater surface in the Z-axis direction. The antenna effective area is calculated by the product of $W_{ERP}$ and H, that is, the following Expression (5).

$$Ae = W_{ERP} \times H \quad (5)$$

Here, the effective width $W_{ERP}$ of the repeater surface is calculated by the following Expression (6) (see https://www.softwright.com/faq/engineering/Catolog%20161A%20-%20Screen.pdf).

$$W_{ERP} = W_{RP} \cos(q_I) \quad (6)$$

In general, the antenna gain is calculated by the following Expressions (7) and (8). Expression (7) represents the antenna gain in true value, and Expression (8) represents the antenna gain in decibels (dB).

[Math. 5]

$$G_{Rx} = \frac{4\pi}{\lambda_{(m)}^2} \cdot A_{e(m^2)} \quad (7)$$

[Math. 6]

$$G_{Rx(dB)} = 10 \log_{10} \left( \frac{4\pi}{\lambda_{(m)}^2} \cdot A_{e(m^2)} \right)$$

$$= 10 \log_{10}(4\pi) + 20 \log_{10} \left( \frac{1}{\lambda_{(m)}} \right) + 10 \log_{10} \left( A_{e(m^2)} \right)$$

$$= 10 \log_{10}(4\pi) + 20 \log_{10} \left( \frac{f_{(Hz)}}{3.0 \times 10^8 \left(\frac{m}{s}\right)} \right) + 10 \log_{10} \left( A_{e(m^2)} \right)$$

$$= 10 \log_{10}(4\pi) + 20 \log_{10} \left( \frac{f_{(GHz)}}{0.3} \right) + 10 \log_{10} \left( A_{e(m^2)} \right)$$

$$= 10 \log_{10}(4\pi) - 20 \log_{10}(0.3) + 20 \log_{10}\left(f_{(GHz)}\right) + 10 \log_{10} \left( A_{e(m^2)} \right)$$

$$= 21.45 + 20 \log_{10}\left(f_{(GHz)}\right) + 10 \log_{10} \left( A_{e(m^2)} \right) \qquad (8)$$

Ae denotes an antenna effective area (m²), and λ denotes a wavelength (m). Note that, here, for simplification of description, the speed of light is approximated to $3.0 \times 10^8$ [m/s]. Antenna aperture efficiency can also be taken into consideration, but is omitted here for the sake of description. Note that, in a case where the antenna area is expressed in square feet (feet²), the antenna gain is calculated by the following Expression (9).
[Math. 7]

$$G_{Rx(dB)} = 11.1 + 20 \log_{10}\left(f_{(GHz)}\right) + 10 \log_{10} \left( A_{e(feet^2)} \right) \qquad (9)$$

Such an antenna gain expression is applied to the repeater 140. That is, the repeater gain can be expressed by the following Expression (10). Note that the antenna area is expressed in square feet.
[Math. 8]

$$G_{Repeater(dB)} = 11.1 + 20 \log_{10}\left(f_{(GHz)}\right) + 10 \log_{10}(A_e)$$

$$= 11.1 + 20 \log_{10}\left(f_{(GHz)}\right) + 10 \log_{10}(H \cdot W_{RP} \cos\theta_I) \qquad (10)$$

Therefore, a point at which $G_{Repeater}$ calculated by Expression (10) exceeds a predetermined antenna gain value $G_{Repeater, Th}$ serving as the threshold is set as a point to be included in the interference source region. As described above, it is possible to determine the interference source region by using the method for determining whether or not a point is to be included in the interference source region on the basis of the antenna gain. For example, a range of the incident angle $\theta_I$ in which $G_{Repeater}$ exceeds $G_{Repeater, Th}$ is calculated, and a region within the range is set as the interference source region.
In the above description of Calculation Examples 1 to 3, it is assumed that a passive repeater is used as the repeater 140, but a repeater other than the passive repeater can also perform similar processing. As an example other than the passive repeater, a repeater capable of changing, as desired, the reflection direction or the power level of a reflected wave may be used. In a case where such a repeater is used, it is only required to acquire capability information or current setting information regarding reflection at the repeater, calculate the reflection direction or the repeater gain using the acquired information, and determine the interference source region.

[Determination of exclusion zone where secondary use of spectrum by the present communication system is restricted]

A zone (exclusion zone or restricted zone) where the secondary use of a spectrum by the present communication system (secondary system) is restricted in accordance with the transmission power is determined using the information regarding the interference source region described above. A spectrum subject to the restriction on the secondary use is a spectrum that is the same as or adjacent to the spectrum used by the protection target system (that is, a spectrum at least partially coincides with the spectrum used by the protection target system).

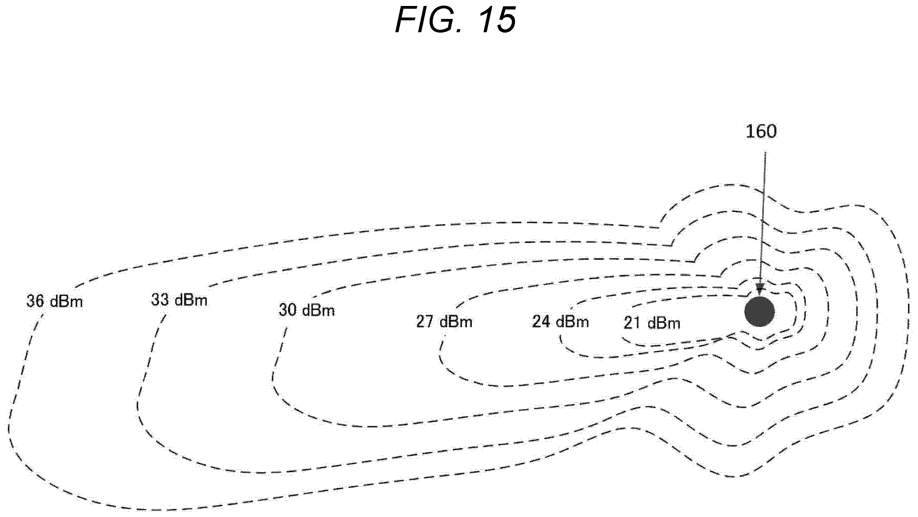

Fig. 15 illustrates an example of the exclusion zone for protecting the receiver 160. The exclusion zone is represented by a plurality of contours, that is, boundary lines. The maximum allowable transmission power (for example, EIRP) or the transmission power limit value of the communication device (SPD, CBSD, or the like) is associated with each contour (boundary line). In a region within each contour, the use of the maximum transmission power corresponding to the contour is prohibited. For example, in a zone between a contour (21dBm) and a contour (24dBm), the use of transmission power up to 21dBm is allowed. The outermost contour (36dBm) corresponds to the maximum transmission power set for the communication device 110. In a region within the innermost contour (21dBm), the secondary use of a spectrum is prohibited regardless of the transmission power value. The communication control device 130 of the communication system (AFC system or the like) can determine the maximum allowable transmission power in a case where one communication device 110 makes a transmission in a spectrum that is the same as or adjacent to the spectrum used by the receiver 160 by comparing the information regarding the exclusion zone with the position information regarding the communication device.

More specifically, the processing unit 32 of the communication control device 130 determines, for each transmission power value, an exclusion zone where radio wave transmission in the spectrum used by the protection target system is restricted. That is, a zone (boundary line) having the allowable maximum transmission power value set therefor is determined such that the larger the distance from the receiver 160, the larger the allowable transmission power value. At this time, for the point inside the interference source region, for example, the maximum transmission power can be determined on the basis of the propagation loss of the path between the point and the receiver 160, the propagation loss of the path between the point and the repeater 140, the propagation loss of the path between the repeater 140 and the receiver 160, the antenna gain of the receiver 160, and the allowable interference quantity of the receiver 160. For the point outside the interference source region, the maximum transmission power can be determined on the basis of the propagation loss of the path between the point and the receiver 160, the antenna gain of the receiver 160, and the allowable interference quantity of the receiver 160. It is possible to determine, by using the method for determining the maximum transmission power for any point as described above, the exclusion zone (exclusion zone associated with the transmission power limit value) corresponding to the transmission power value. Note that, in a case where the antenna of the receiver 160 has a receiving beam pattern, the gain of the receiving beam pattern may be used.

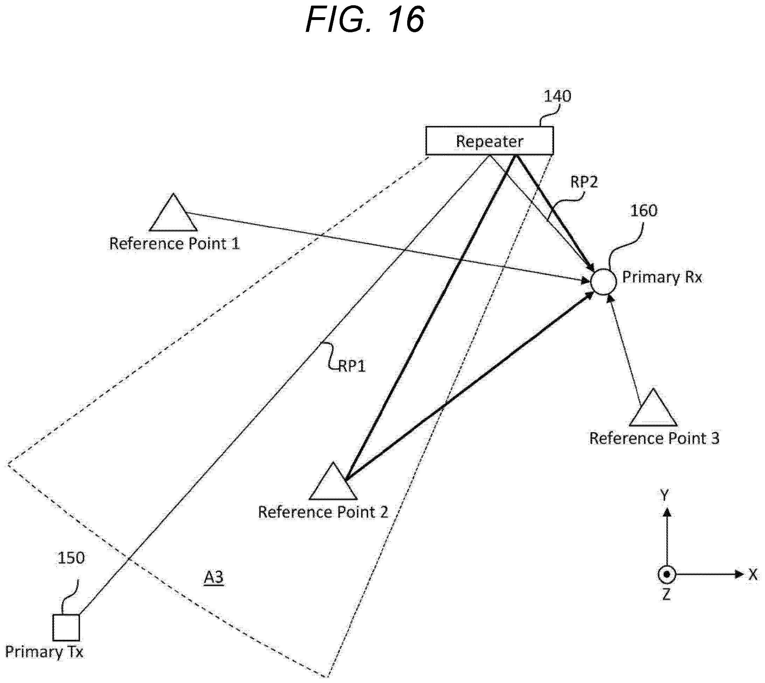

Fig. 16 is a diagram for describing a specific example of how to determine the exclusion zone where the secondary use of a spectrum is prohibited. The interference source region A3 calculated by any of the methods described above is illustrated. Furthermore, three reference points 1 to 3 are illustrated for description of a calculation example of the exclusion zone.

(Method for determining whether or not a reference point falls within the exclusion zone in a case where the reference point is located outside the interference source region)

The reference point 1 and the reference point 3 are located outside the interference source region A3. For the calculation of the exclusion zone, it is only required to consider the quantity of direct interference affecting the receiver 160 from each of the reference points 1 and 3. An interference protection criterion for the receiver 160 is set as an interference power-to-noise power ratio (I/N), and a predetermined I/N serving as a threshold is set as $I/N_{Th~(dB)}$. Furthermore, the maximum transmission power corresponding to the boundary line of the exclusion zone desired to be obtained is denoted by $P_{tx,~max~(dBm)}$ (corresponding to, for example, numerical values such as 36dBm and 27dBm in Fig. 15). In this case, whether or not the reference point 1 and the reference point 3 fall within the exclusion zone inside the boundary line corresponding to each maximum transmission power can be determined on the basis of the condition represented by the following Expression (11).

$$I/N_{Th~(dB)} + N_{(dBm)} < P_{tx,~max(dBm)} - L_{RP\text{-}PRx~(dB)} + G_{Rx~(dB)}$$

(11)

Here, $L_{RP\text{-}PRx~(dB)}$ is a propagation loss (path loss) of a path between the reference point and the receiver 160. The path loss can be calculated on the basis of the positional relationship between the position of the reference point and the receiver 160. $G_{Rx~(dB)}$ denotes the antenna gain of the receiver 160, and $N_{(dBm)}$ denotes the noise power of the receiver 160. Although not included in this expression, other fixed losses such as feeder loss may be considered. The sum of $I/N_{Th~(dB)}$ and $N_{(dBm)}$ on the left side corresponds to the allowable interference quantity of the receiver 160. In a case where the right side is greater than the left side, it is determined that the reference point falls within the exclusion zone inside the boundary line corresponding to $P_{tx,~max(dBm)}$.

(Method for determining whether or not a reference point falls within the exclusion zone in a case where the reference point is located inside the interference source region)

The reference point 2 is located in the interference source region 2. It is therefore necessary to consider not only the interference quantity ($I_{Direct(dBm)}$) of the direct wave interfering with the receiver 160 from the reference point but also the interference quantity due to the reflected wave reflected by the repeater 150. Whether or not the reference point 2 falls within exclusion zone inside the boundary line corresponding to each maximum transmission power ($P_{tx, max(dBm)}$) can be determined on the basis of the condition represented by the following Expression (12). The interference quantity of the direct wave is denoted by $I_{Direct(dBm)}$, and the interference quantity of the reflected wave is denoted by ($I_{Indirect(dBm)}$).

[Math. 9]

$$I/N_{Th\,(dB)} + N_{(dBm)} < 10\log_{10}\left(10^{\frac{I_{Direct(dBm)}}{10}} + 10^{\frac{I_{Indirect(dBm)}}{10}}\right)$$

$$= 10\log_{10}\left(10^{\frac{P_{Tx,max(dBm)}-L_{RP-PRx(dB)}+G_{Rx(dB)}}{10}} + 10^{\frac{P_{Tx,max(dBm)}-L_{RP-PRP(dB)}-L_{PRP-PRx(dB)}+G_{Rx(dB)}}{10}}\right)$$

$$(12)$$

Here, $L_{RP-PRP\,(dB)}$ denotes the path loss between the reference point 2 and the repeater 140, and $L_{RRP-PRX\,(dB)}$ denotes the path loss between the repeater 140 and the receiver 160. Note that the path loss between the repeater 140 and the receiver 160 may be determined in consideration of at least one of the repeater gain, the sidelobes, or the like described above.

It is possible to create, by selecting various points as reference points and performing such a calculation, the boundary line of the exclusion zone corresponding to each maximum transmission power $P_{tx, max(dBm)}$.

The conditional expression of Expression (12) may be transformed into a different conditional expression represented by the following Expression (13). According to Expression (13), for example, when the maximum allowable transmission power $P_{tx, max-allowed(dBm)}$ at the reference point 2 is less than or equal to $P_{tx, max(dBm)}$, the reference point 2 falls within exclusion zone inside the boundary line corresponding to $P_{tx, max(dBm)}$.

$$P_{tx,\ max(dBm)} \geq P_{tx,\ max-allowed(dBm)} = I/N_{Th\ (dB)} + N_{(dBm)} + L_{RP-PRx\ (dB)} - G_{Rx\ (dB)} \qquad (13)$$

The communication control device 130 can protect, by setting the exclusion zone as described above, the receiver 160 from interference in consideration of the influence of the repeater 140. For example, on the assumption that there is only one communication device that desires to use the same spectrum as used by the protection target system (in a case where there is a single station), it is only required to determine whether or not to grant permission to use the spectrum to the communication device and the transmission power in a case where the permission is granted on the basis of the position of the communication device, the information regarding the maximum transmission power corresponding to the exclusion zone including the position, and the allowable interference quantity of the receiver 160. When there is a plurality of communication devices that desires to use the spectrum, whether or not to grant permission to use the spectrum to each communication device and the transmission power of each communication device in a case where the permission is granted may be determined on the basis of the position of each communication device, the information regarding the maximum transmission power corresponding to the exclusion zone including each position, and the allowable interference quantity (allowable aggregated interference quantity) of the receiver 160.

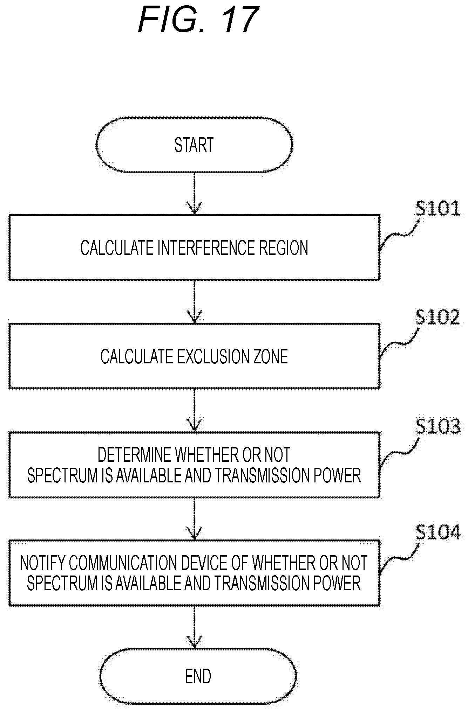

Fig. 17 is a flowchart of an example of processing according to the present embodiment. More specifically, this flowchart illustrates an example of processing of setting the exclusion zone on the basis of the information regarding the interference source region and controlling the use of the spectrum of the communication device. The processing unit 32 calculates the interference source region with respect to the receiver 160 by the method described in any one of Calculation Examples 1 to 3 (S101). The processing unit 32 calculates the exclusion zone corresponding to the transmission power value for the receiver 160 by the above-described processing on the basis of the information regarding the calculated interference source region (S102). The processing unit 32 determines, for the communication device 110 that requests the use of the same spectrum as of the protection target system, whether or not the spectrum is available and the allowable transmission power value in a case where the spectrum is available on the basis of the position of the communication device 110 and the information regarding the exclusion zone (S103). The processing unit 32 transmits a response including the determination result indicating whether or not the spectrum is available. In a case where the spectrum is available, the response includes the maximum allowable transmission power value of the communication device 110 (S104).

[Determination of available spectrum and maximum allowable transmission power of communication device in the present communication system (secondary system)]

It is possible to determine the available spectrum and the maximum allowable transmission power (maximum transmission power) of the communication device 110 in a manner similar to the calculation of the exclusion zone. Consider the same scenario as the example illustrated in Fig. 16 described above.

The reference point 1 and the reference point 3 are located outside the interference source region A3. Therefore, in order to calculate the maximum allowable transmission power for each of the reference points 1 and 3 (or the maximum allowable transmission power of the communication device located at each of the reference points 1 and 3) in the spectrum used by the receiver 160, it is only required to consider the quantity of direct interference affecting the receiver 160 from the reference points 1 and 3.

The interference protection criterion of the receiver 160 is set as an interference-to-noise power ratio (I/N), and a threshold of the interference-to-noise power ratio is set as $I/N_{Th\ (dB)}$. In this case, the maximum allowable transmission power $P_{tx,\ max\text{-}allowed\ (dBm)}$ at the reference point 1 and the reference point 3 can be calculated by the following Expression (14).

$$P_{tx,\ max\text{-}allowed(dBm)} \leq I/N_{Th\ (dB)} + N_{(dBm)} + L_{RP\text{-}PRx\ (dB)} - G_{Rx\ (dB)} \quad (14)$$

On the other hand, the reference point 2 is located in the interference source region A2. It is therefore necessary to consider not only the interference quantity due to the direct wave ($I_{Direct(dBm)}$) but also the interference quantity due to the reflected wave reflected by the repeater 140. The maximum allowable transmission power at the reference point 2 (or the maximum allowable transmission power of the communication device located at the reference point 2) can be calculated by sequentially transforming the condition represented by the inequality of the following Expression (15) into Expressions (16) to (21). Here, it is assumed that the antenna gain of the receiver 160 is uniform in all directions.

[Math. 10]

$$I/N_{Th\,(dB)} + N_{(dBm)} \geq 10\log_{10}\left(10^{\frac{I_{Direct(dBm)}}{10}} + 10^{\frac{I_{Indirect(dBm)}}{10}}\right)$$

$$= 10\log_{10}\left(10^{\frac{P_{Tx,max-allowed(dBm)}-L_{RP-PRx(dB)}+G_{Rx(dB)}}{10}} + \right.$$

$$\left. 10^{\frac{P_{Tx,max-allowed(dBm)}-L_{RP-PRP(dB)}-L_{PRP-PRx(dB)}+G_{Rx(dB)}}{10}}\right) \qquad (1\,5)$$

$$10^{\frac{I/N_{Th\,(dB)}+N_{(dBm)}}{10}} \geq 10^{\frac{P_{Tx,max-allowed(dBm)}-L_{RP-PRx(dB)}+G_{Rx(dB)}}{10}} +$$

$$10^{\frac{P_{Tx,max-allowed(dBm)}-L_{RP-PRP(dB)}-L_{PRP-PRx(dB)}+G_{Rx(dB)}}{10}} \qquad (1\,6)$$

$$10^{\frac{I/N_{Th\,(dB)}+N_{(dBm)}}{10}} \geq 10^{\frac{P_{Tx,max-allowed(dBm)}}{10}}\left(10^{\frac{G_{Rx(dB)}-L_{RP-PRx(dB)}}{10}} + \right.$$

$$\left. 10^{\frac{G_{Rx(dB)}-L_{RP-PRP(dB)}-L_{PRP-PRx(dB)}}{10}}\right) \qquad (1\,7)$$

$$10^{\frac{P_{Tx,max-allowed(dBm)}}{10}} \leq \frac{10^{\frac{I/N_{Th\,(dB)}+N_{(dBm)}}{10}}}{10^{\frac{G_{Rx(dB)}-L_{RP-PRx(dB)}}{10}}+10^{\frac{G_{Rx(dB)}-L_{RP-PRP(dB)}-L_{PRP-PRx(dB)}}{10}}} \qquad (1\,8)$$

$$P_{Tx,max-allowed(dBm)} \leq 10\log_{10}\left(\frac{10^{\frac{I/N_{Th\,(dB)}+N_{(dBm)}}{10}}}{10^{\frac{G_{Rx(dB)}-L_{RP-PRx(dB)}}{10}}+10^{\frac{G_{Rx(dB)}-L_{RP-PRP(dB)}-L_{PRP-PRx(dB)}}{10}}}\right)$$

$$(1\,9)$$

$$P_{Tx,max-allowed(dBm)} \leq 10\log_{10}\left\{\frac{10^{\frac{I/N_{Th\,(dB)}+N_{(dBm)}}{10}}}{10^{\frac{G_{Rx(dB)}}{10}}\left(10^{\frac{-L_{RP-PRx(dB)}}{10}}+10^{\frac{-L_{RP-PRP(dB)}-L_{PRP-PRx(dB)}}{10}}\right)}\right\} \qquad (2\,0)$$

$$P_{Tx,max-allowed(dBm)} \leq 10\log_{10}\left(\frac{10^{\frac{I/N_{Th\,(dB)}+N_{(dBm)}-G_{Rx(dB)}}{10}}}{10^{\frac{-L_{RP-PRx(dB)}}{10}}+10^{\frac{-L_{RP-PRP(dB)}-L_{PRP-PRx(dB)}}{10}}}\right) \qquad (2\,1)$$

In Expression (21), a numerator in log may be regarded as an interference power threshold of an antenna input terminal of the receiver 160, and a denominator may be regarded as a sum of path losses of all interference paths including an interference path via a repeater and an interference path of the direct wave. The same applies to a case where the number of repeaters increases. In other words, in the interference source region, the maximum allowable transmission power of the present communication system (secondary system) (for example, the maximum allowable transmission power in a case where there is one signal device in the interference source region) can be calculated on the basis of the interference power threshold of the receiving antenna input terminal of the receiver 160 and the sum of path losses (true values) of all interference paths. A calculation expression of the maximum allowable transmission power according to this definition is expressed by the following Expression (22). Note that the influence of at least one of the repeater gain, the sidelobes, or the like described for the above-described method may also be considered for the path loss.
[Math. 11]

$$P_{Tx,max-allowed(dBm)} \leq 10\log_{10}\left\{\frac{10^{\frac{I_{Th,RxAntennaInput}}{10}}}{\sum_{n=1}^{N_{InterferencePath}}\left(10^{\frac{-L_{n(dB)}}{10}}\right)}\right\} \qquad (2\,2)$$

$N_{interferencePath}$ denotes the total number of interference paths (including both the interference path via the repeater 140 and direct interference path). $N_{Th}$, RxAntennaInput denotes the interference power threshold (threshold of the allowable interference quantity) of the receiving antenna input terminal of the receiver 160. In the example in Fig. 16, $N_{InterferencePath}$ in Expression (20) is 2. n = 1 corresponds to the path loss of direct interference wave, and n = 2 corresponds to the path loss of the interference path of the reflected wave via the repeater 140.

In Expressions (15) to (22), a case where the antenna gain of the receiver 160 is uniform in all directions is assumed; however, in a case where the antenna pattern (receiving beam pattern) of the receiver 160 is considered, the following Expression (23) is sequentially transformed into Expressions (24) to (27). Accordingly, the maximum allowable transmission power at a point in the interference source region can be calculated.

[Math. 12]

$$I/N_{Th\,(dB)} + N_{(dBm)} \geq 10 \log_{10}\left(10^{\frac{I_{Direct(dBm)}}{10}} + 10^{\frac{I_{Indirect(dBm)}}{10}}\right)$$

$$= 10 \log_{10}\left(10^{\frac{P_{Tx,max-allowed(dBm)}-L_{RP-PRx(dB)}+G_{Rx,direct(dB)}}{10}} + \right.$$

$$\left.10^{\frac{P_{Tx,max-allowed(dBm)}-L_{RP-PRP(dB)}-L_{PRP-PRx(dB)}+G_{Rx,towardsRepeater(dB)}}{10}}\right) \qquad (23)$$

$$10^{\frac{I/N_{Th\,(dB)}+N_{(dBm)}}{10}}$$

$$\geq 10^{\frac{P_{Tx,max-allowed(dBm)}-L_{RP-PRx(dB)}+G_{Rx,direct(dB)}}{10}}$$

$$+ 10^{\frac{P_{Tx,max-allowed(dBm)}-L_{RP-PRP(dB)}-L_{PRP-PRx(dB)}+G_{Rx,towardsRepeater(dB)}}{10}} \qquad (24)$$

$$10^{\frac{I/N_{Th\,(dB)}+N_{(dBm)}}{10}}$$

$$\geq 10^{\frac{P_{Tx,max-allowed(dBm)}}{10}}\left(10^{\frac{G_{Rx,direct(dB)}-L_{RP-PRx(dB)}}{10}}\right.$$

$$\left.+ 10^{\frac{G_{Rx,towardsRepeater(dB)}-L_{RP-PRP(dB)}-L_{PRP-PRx(dB)}}{10}}\right) \qquad (25)$$

$$10^{\frac{P_{Tx,max-allowed(dBm)}}{10}}$$

$$\leq \frac{10^{\frac{\frac{I}{N}_{Th\,(dB)}+N_{(dBm)}}{10}}}{10^{\frac{G_{Rx,direct(dB)}-L_{RP-PRx(dB)}}{10}} + 10^{\frac{G_{Rx,towardsRepeater(dB)}-L_{RP-PRP(dB)}-L_{PRP-PRx(dB)}}{10}}} \qquad (26)$$

$$P_{Tx,max-allowed(dBm)}$$

$$\leq 10 \log_{10}\left(\frac{10^{\frac{\frac{I}{N}_{Th\,(dB)}+N_{(dBm)}}{10}}}{10^{\frac{G_{Rx,direct(dB)}-L_{RP-PRx(dB)}}{10}} + 10^{\frac{G_{Rx,towardsRepeater(dB)}-L_{RP-PRP(dB)}-L_{PRP-PRx(dB)}}{10}}}\right)$$

$$(27)$$

From Expression (27), it can be said that in the interference source region where the repeater 140 needs to be considered, the maximum allowable transmission power of the communication system (secondary system) can be calculated on the basis of the interference power threshold of the receiver 160 and the sum of path losses (coupling losses) of all interference paths. Note that the influence of at least one of the repeater gain, the sidelobes, or the like described for the above-described method may also be considered for the coupling loss.

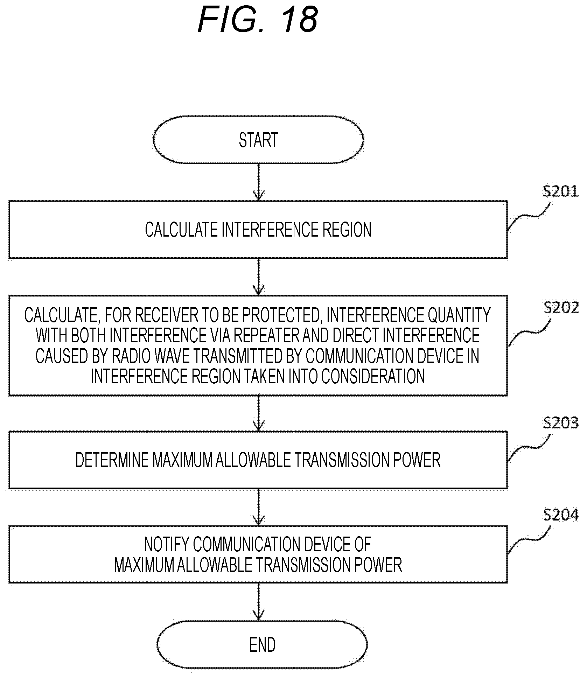

Fig. 18 is a flowchart of another example of the processing according to the present embodiment. More specifically, this flowchart illustrates an example of processing of controlling, on the basis of the information regarding the interference source region, the use of the spectrum of the communication device with the quantity of interference due to the reflected wave reflected by the repeater also taken into consideration. The processing unit 32 calculates the interference source region with respect to the receiver 160 by the method described in any one of Calculation Examples 1 to 3 (S201). The processing unit 32 calculates, for the communication device 110 requesting the use of the same spectrum as of the protection target system, the quantity of interference affecting the receiver 160 by the above-described processing on the basis of the information regarding the calculated interference source region and the position information regarding the communication device 110 (S202). That is, in a case where the communication device 110 is located in the interference source region, the interference quantity of the receiver 160 is calculated with the interference quantity caused via the repeater 140 also taken into consideration. The processing unit 32 determines whether or not the spectrum is available and the allowable transmission power value in a case where the spectrum is available on the basis of the calculated interference quantity (S203). The processing unit 32 transmits a response including the determination result indicating whether or not the spectrum is available. In a case where the spectrum is available, the response includes the maximum allowable transmission power value of the communication device 110 (S204) .

In a case where there is a plurality of repeaters, there are various cases such as an interference path that reaches the receiver 160 via two or more repeaters, and an interference path reflects only at one repeater to reach the receiver 160. For example, there may be a case where only one interference path reaches the receiver 160 via all repeaters, or there may be a case where an interference path reflects only once at each repeater to reach the receiver 160 as interference (that is, the number of interference paths = the number of repeaters). Therefore, in a case where there is a plurality of repeaters around the receiver 160, the communication control device 130 desirably first specifies an interference path of the reflected wave to be calculated in the above-described expression at a reference point to be calculated.

In the embodiment described above, the repeater around the receiver 160 is a repeater used in the communication path of the protection target system (primary system), that is, the communication path between the transmitter 150 and the receiver 160. Whether or not the radio wave transmitted by the communication device 110 is reflected by the repeater used in the other primary system and causes interference affecting the receiver 160, that is, whether or not the interference path of the reflected wave reflected by the repeater used in the other primary system should be considered in determining the transmission power of the communication device 110 may be determined by applying the above-described method for determining the interference source region. In a case where it is determined that the consideration is necessary, the maximum allowable transmission power may be calculated or the like on the basis of the above-described expression with the quantity of interference affecting the receiver 160 by the reflected wave reflected by the repeater belonging to the other primary system also taken into consideration. That is, the communication paths of the primary system are coordinated in advance so as not to interfere with each other. Therefore, there is a possibility that some communication systems (secondary systems) make the receiver of the primary system subject to interference due to reflection at not only the repeater on the communication path of the receiver but also the repeater on the communication path of the other primary system. It is therefore possible to calculate the maximum allowable transmission power of the communication device 110 more appropriately by considering the interference path of the reflected wave reflected by the repeater belonging to the other primary system.

In the embodiment described above, the communication control device 130 calculates the interference source region, or alternatively, an information processing device that is an external entity different from the communication control device 130 may calculate the interference source region.

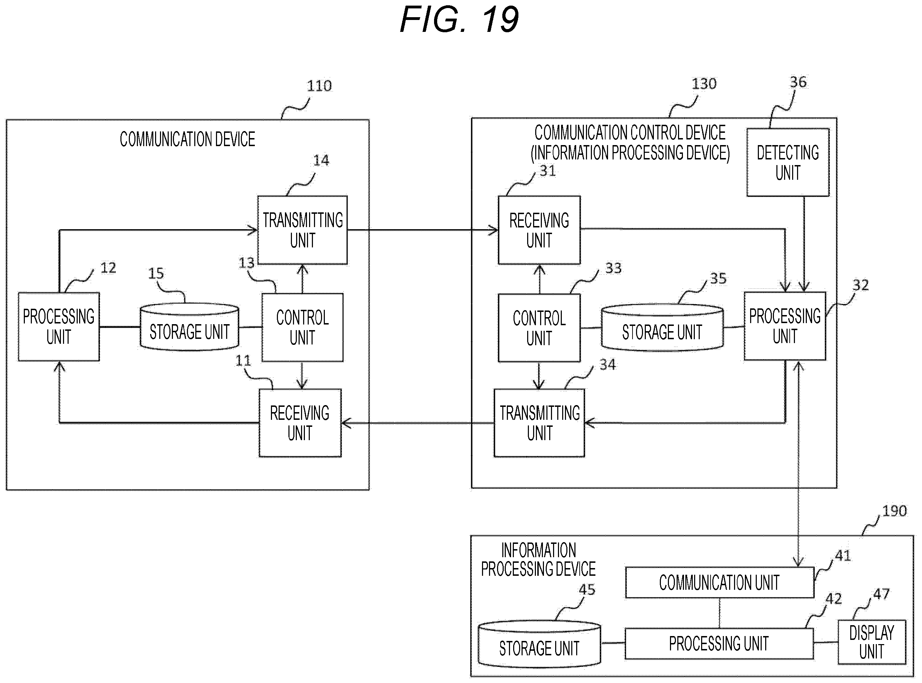

Fig. 19 is a block diagram of another example of the communication system according to the present embodiment. An information processing device 190, which is an external entity different from the communication control device 130, calculates the interference source region. The information processing device 190 includes a communication unit 41, a processing unit 42, a storage unit 45, and a display unit 470. In addition, an input unit to which the user of the present device inputs an instruction or data may be provided.

The communication unit 41 transmits and receives data or information to and from the communication control device 130 in a wired or wireless manner. The storage unit 45 stores information (for example, information regarding the repeater 140, information regarding the receiver 160 and the transmitter 150, map information, and the like) similar to the information necessary for calculating the interference source region among the pieces of information stored in the storage unit 35 of the communication control device 130.

The processing unit 42 calculates the interference source region on the basis of the information stored in the storage unit 45 by processing similar to the processing performed by the processing unit 32 of the communication control device 130. The processing unit 42 provides the information regarding the interference source region to the processing unit 32 of the communication control device 130 via the communication unit 41. The display unit 47 displays the information indicating the calculated interference source region on the screen so as to make the interference source region visible to the user. The processing unit 32 of the communication control device 130 can calculate the exclusion zone, the maximum allowable transmission power, and the like by the same method as described above on the basis of the information regarding the interference source region acquired from the information processing device 190.

The processing unit 42 may regularly or irregularly acquire the position information regarding the receiver 160 and the transmitter 150 and the like from the protection target system, and calculate the interference source region on the basis of the acquired information. The processing unit 32 of the communication control device 130 may regularly or irregularly acquire the information regarding the interference source region from the information processing device 190.

In the present embodiment, the fixed service is the protection target system as the primary system, but the protection target system may be any wireless system using a repeater.

The relationship between the primary system and the secondary system is not limited to the hierarchical relationship in which the primary system is protected from the secondary system, and the calculation of the interference source region, the calculation of the exclusion zone, the calculation of the maximum allowable transmission power, and the like can be performed under various interference coordination scenarios such as interference coordination between secondary systems and interference coordination between primary systems.

Furthermore, as described above, the processing of the present embodiment can be performed in a case where the interference affecting the receiver in the protection target system is not only interference caused by a single station (single communication device) but also aggregated interference caused by a plurality of stations (a plurality of communication devices).

In the present embodiment, the information regarding the interference source region is mainly used in controlling the secondary use of a spectrum by the communication device located in the interference source region, but other uses of the information regarding the interference source region are also possible. For example, the information regarding the interference source region may be used in determining an installation location in a case where the communication device 110 is fixedly installed. To put it simply, a point where the communication device 110 is installed may be determined so as not to fall within the interference source region. Furthermore, in a case where the communication device 110 is installed in the interference source region, it may be determined to install the communication device 110 at a point where interference affecting the receiver 160 is smaller.

As described above, according to the present embodiment, even in a case where interference affects the receiver via the repeater, the quantity of interference affecting the receiver can be appropriately calculated; therefore, it is possible to enhance the spectrum utilization efficiency by enabling the secondary use of a spectrum while protecting the protection target system (primary system).

Note that the embodiment described above represents an example for embodying the present disclosure, and the present disclosure can be implemented in various other modes. For example, various modifications, substitutions, omissions, or combinations thereof are possible without departing from the gist of the present disclosure. Such modifications, substitutions, omissions, and the like are also included in the scope of the present disclosure, and are similarly included in the inventions disclosed in the claims and the equivalents thereof.

Furthermore, the effects of the present disclosure described in the present specification are merely examples, and other effects may be achieved.

Note that the present disclosure may have the following configurations.

[Item 1]

A processing unit that calculates, on the basis of position information regarding a first receiver and arrangement information regarding a repeater that reflects a first radio wave transmitted from a first transmitter to relay the first radio wave to the first receiver, an interference source region for determining whether or not a second transmitter that makes a secondary use of a spectrum identical to or adjacent to a spectrum used by the first transmitter and the first receiver is located at a position where there is a possibility that a second radio wave transmitted by the second transmitter is reflected by the repeater to cause interference affecting the first receiver

[Item 2]

The information processing device according to item 1, in which the arrangement information includes information regarding a position, an orientation, and a size of the repeater.

[Item 3]

The information processing device according to item 1, in which the processing unit calculates the interference source region on the basis of an incident angle of the second radio wave incident on the repeater.

[Item 4]

The information processing device according to item 3, in which
the processing unit calculates the interference source region further on the basis of a reflection angle of the second radio wave reflected by the repeater.

[Item 5]

The information processing device according to item 4, in which
the processing unit calculates a range of an incident angle in which the second radio wave reflected by the repeater is received by the first receiver, and sets a region surrounded by the range of the incident angle as the interference source region.

[Item 6]

The information processing device according to item 5, in which
the processing unit specifies a part of the region surrounded by the range of the incident angle on the basis of a transmission power value of the second radio wave, and sets the part of the region as the interference source region.

[Item 7]

The information processing device according to any one of items 1 to 6, in which
the processing unit calculates sidelobes of a radio wave corresponding to the second radio wave reflected by the repeater, and calculates the interference source region on the basis of a value of the sidelobes in a direction from the repeater to the first receiver.

[Item 8]

The information processing device according to item 7, in which
the processing unit calculates an envelope of the sidelobes, and calculates the interference source region on the basis of a value of the envelope in the direction from the repeater to the first receiver.

[Item 9]

The information processing device according to item 8, in which
the processing unit sets, as the interference source region, a region of a transmission source of the second radio wave where the value of the envelope is greater than a threshold.

[Item 10]

The information processing device according to any one of items 1 to 9, in which
the processing unit calculates a gain of the repeater on the basis of an incident angle of the second radio wave incident on the repeater, and calculates the interference source region on the basis of a value of the gain.

[Item 11]

The information processing device according to item 10, in which
the processing unit sets, as the interference source region, a region of a transmission source of the second radio wave where the value of the gain is greater than a threshold.

[Item 12]

The information processing device according to any one of items 1 to 11, in which
the processing unit determines a restricted zone associated with one or more transmission power limit values applicable to the second transmitter on the basis of a condition defining a relationship among a propagation loss between the second transmitter and the first receiver, a propagation loss between the second transmitter and the repeater, a propagation loss between the repeater and the first receiver, an antenna gain of the first receiver, an allowable interference quantity of the first receiver, and maximum transmission power transmittable from the second transmitter.

[Item 13]

The information processing device according to item 12, in which
the processing unit determines the allowable maximum transmission power for the second transmitter on the basis of position information regarding the second transmitter and information regarding the restricted zone.

[Item 14]

The information processing device according to any one of items 1 to 13, in which
the processing unit determines maximum transmission power transmittable from the second transmitter on the basis of a propagation loss between the second transmitter and the first receiver, a propagation loss between the second transmitter and the repeater, a propagation loss between the repeater and the first receiver, an antenna gain of the first receiver, an allowable interference quantity of the first receiver.

[Item 15]

The information processing device according to item 14, in which
the processing unit calculates the propagation loss between the second transmitter and the first receiver on the basis of an antenna gain of an antenna of the first receiver with respect to a direction of the second transmitter, and calculates the power loss between the repeater and the first receiver on the basis of an antenna gain of the antenna of the first receiver with respect to a direction of the repeater.

[Item 16]

An information processing method including:

acquiring position information regarding a receiver and arrangement information regarding a repeater that reflects a first radio wave transmitted from a transmitter to relay the first radio wave to the first receiver; and
calculating, on the basis of the position information regarding the first receiver and the arrangement information, an interference source region for determining whether or not a second transmitter that makes a secondary use of a spectrum identical to or adjacent to a spectrum used by the first transmitter and the first receiver is located at a position where there is a possibility that a second radio wave transmitted by the second transmitter is reflected by the repeater to cause interference affecting the first receiver.

[Item 17]

A computer program causing a computer to execute:

acquiring position information regarding a receiver and arrangement information regarding a repeater that reflects a first radio wave transmitted from a transmitter to relay the first radio wave to the first receiver; and
calculating, on the basis of the position information regarding the first receiver and the arrangement information, an interference source region for determining whether or not a second transmitter that makes a secondary use of a spectrum identical to or adjacent to a spectrum used by the first transmitter and the first receiver is located at a position where there is a possibility that a second radio wave transmitted by the second transmitter is reflected by the repeater to cause interference affecting the first receiver.

REFERENCE SIGNS LIST

| 11 | Receiving unit |
| 12 | Processing unit |
| 13 | Control unit |
| 14 | Transmitting unit |
| 15 | Storage unit |
| 31 | Receiving unit |
| 32 | Processing unit |
| 33 | Control unit |

| | |
|---|---|
| 34 | Transmitting unit |
| 35 | Storage unit |
| 36 | Detecting unit |
| 41 | Communication unit |
| 42 | Processing unit |
| 45 | Storage unit |
| 47 | Display unit |
| 110, 110A, 110B, 110C, A to D, 110_1 to 110_5 | Communication device |
| 120 | Terminal |
| 130, 130A, 130B | Communication control device (information processing device) |
| 140 | Repeater |
| 150 | Transmitter of protection target system |
| 160 | Receiver of protection target system |
| 190 | Information processing device |

**Claims**

1. An information processing device comprising
   a processing unit that calculates, on a basis of position information regarding a first receiver and arrangement information regarding a repeater that reflects a first radio wave transmitted from a first transmitter to relay the first radio wave to the first receiver, an interference source region for determining whether or not a second transmitter that makes a secondary use of a spectrum identical to or adjacent to a spectrum used by the first transmitter and the first receiver is located at a position where there is a possibility that a second radio wave transmitted by the second transmitter is reflected by the repeater to cause interference affecting the first receiver.

2. The information processing device according to claim 1, wherein
   the arrangement information includes information regarding a position, an orientation, and a size of the repeater.

3. The information processing device according to claim 1, wherein
   the processing unit calculates the interference source region on a basis of an incident angle of the second radio wave incident on the repeater.

4. The information processing device according to claim 3, wherein
   the processing unit calculates the interference source region further on a basis of a reflection angle of the second radio wave reflected by the repeater.

5. The information processing device according to claim 4, wherein
   the processing unit calculates a range of an incident angle in which the second radio wave reflected by the repeater is received by the first receiver, and sets a region surrounded by the range of the incident angle as the interference source region.

6. The information processing device according to claim 5, wherein
   the processing unit specifies a part of the region surrounded by the range of the incident angle on a basis of a transmission power value of the second radio wave, and sets the part of the region as the interference source region.

7. The information processing device according to claim 1, wherein
   the processing unit calculates sidelobes of a radio wave corresponding to the second radio wave reflected by the repeater, and calculates the interference source region on a basis of a value of the sidelobes in a direction from the repeater to the first receiver.

8. The information processing device according to claim 7, wherein
   the processing unit calculates an envelope of the sidelobes, and calculates the interference source region on a basis of a value of the envelope in the direction from the repeater to the first receiver.

9. The information processing device according to claim 8, wherein
   the processing unit sets, as the interference source region, a region of a transmission source of the second radio wave where the value of the envelope is greater than a threshold.

10. The information processing device according to claim 1, wherein
the processing unit calculates a gain of the repeater on a basis of an incident angle of the second radio wave incident on the repeater, and calculates the interference source region on a basis of a value of the gain.

11. The information processing device according to claim 10, wherein
the processing unit sets, as the interference source region, a region of a transmission source of the second radio wave where the value of the gain is greater than a threshold.

12. The information processing device according to claim 1, wherein
the processing unit determines a restricted zone associated with one or more transmission power limit values applicable to the second transmitter on a basis of a condition defining a relationship among a propagation loss between the second transmitter and the first receiver, a propagation loss between the second transmitter and the repeater, a propagation loss between the repeater and the first receiver, an antenna gain of the first receiver, an allowable interference quantity of the first receiver, and maximum transmission power transmittable from the second transmitter.

13. The information processing device according to claim 12, wherein
the processing unit determines the allowable maximum transmission power for the second transmitter on a basis of position information regarding the second transmitter and information regarding the restricted zone.

14. The information processing device according to claim 1, wherein
the processing unit determines maximum transmission power transmittable from the second transmitter on a basis of a propagation loss between the second transmitter and the first receiver, a propagation loss between the second transmitter and the repeater, a propagation loss between the repeater and the first receiver, an antenna gain of the first receiver, and an allowable interference quantity of the first receiver.

15. The information processing device according to claim 14, wherein
the processing unit calculates the propagation loss between the second transmitter and the first receiver on a basis of an antenna gain of an antenna of the first receiver with respect to a direction of the second transmitter, and calculates the power loss between the repeater and the first receiver on a basis of an antenna gain of the antenna of the first receiver with respect to a direction of the repeater.

16. An information processing method comprising:

acquiring position information regarding a first receiver and arrangement information regarding a repeater that reflects a first radio wave transmitted from a first transmitter to relay the first radio wave to the first receiver; and calculating, on a basis of the position information regarding the first receiver and the arrangement information, an interference source region for determining whether or not a second transmitter that makes a secondary use of a spectrum identical to or adjacent to a spectrum used by the first transmitter and the first receiver is located at a position where there is a possibility that a second radio wave transmitted by the second transmitter is reflected by the repeater to cause interference affecting the first receiver.

17. A computer program causing a computer to execute:

acquiring position information regarding a first receiver and arrangement information regarding a repeater that reflects a first radio wave transmitted from a first transmitter to relay the first radio wave to the first receiver; and calculating, on a basis of the position information regarding the first receiver and the arrangement information, an interference source region for determining whether or not a second transmitter that makes a secondary use of a spectrum identical to or adjacent to a spectrum used by the first transmitter and the first receiver is located at a position where there is a possibility that a second radio wave transmitted by the second transmitter is reflected by the repeater to cause interference affecting the first receiver.

## FIG. 1

EP 4 518 199 A1

# FIG. 2

# FIG. 3

FIG. 4

EP 4 518 199 A1

# FIG. 5

INCUMBENT TIER
Incumbent Tier

PRIORITY ACCESS TIER
Priority Access Tier

GENERAL AUTHORIZED ACCESS (GAA) TIER
General Authorized Access(GAA) Tier

## FIG. 6

120

120

110

T101

CALCULATE COMMUNICATION PARAMETER
TO BE USED BY COMMUNICATION DEVICE
OF SECONDARY SYSTEM

T103

ACQUIRE COMMUNICATION PARAMETER
TO BE USED BY COMMUNICATION DEVICE
(BASE STATION AND TERMINAL)
TO BE USED BY SECONDARY SYSTEM

T102

NOTIFY COMMUNICATION DEVICE OF
SECONDARY SYSTEM OF
COMMUNICATION PARAMETER

T104

SET COMMUNICATION PARAMETER
TO BE USED BY COMMUNICATION DEVICE
(BASE STATION) ITSELF

T106

ACQUIRE COMMUNICATION PARAMETER
TO BE USED BY COMMUNICATION DEVICE
(TERMINAL) OF SECONDARY SYSTEM

T106

ACQUIRE COMMUNICATION PARAMETER
TO BE USED BY COMMUNICATION DEVICE
(TERMINAL) OF SECONDARY SYSTEM

T105

NOTIFY TERMINAL SUBORDINATE TO
COMMUNICATION DEVICE
(BASE STATION) ITSELF OF
COMMUNICATION PARAMETER
TO BE USED BY TERMINAL

T107

SET COMMUNICATION PARAMETER
TO BE USED BY COMMUNICATION DEVICE
(TERMINAL) ITSELF

SET COMMUNICATION PARAMETER
TO BE USED BY COMMUNICATION DEVICE
(TERMINAL) ITSELF

T107

T108

PERFORM COMMUNICATION WITH
OTHER COMMUNICATION DEVICE
(TERMINAL) OF SECONDARY SYSTEM

PERFORM COMMUNICATION WITH
OTHER COMMUNICATION DEVICE
(TERMINAL) OF SECONDARY SYSTEM

T108

EP 4 518 199 A1

# FIG. 7

EP 4 518 199 A1

# FIG. 8

# FIG. 9

53

*FIG. 10*

Repeater 140

RP2 160

Primary Rx

$\theta_p$ $\theta_p$

RP1

AOI limit 2

A2

150

Primary Tx

AOI limit 1

X
Y
Z

# FIG. 11

EP 4 518 199 A1

# FIG. 12

Width W$_{RP}$

Repeater — 140

RP3

RP4

Reference Point

$\theta_l$

$\theta_p$   $\theta_p$   $\theta_\alpha$

160

RP1

RP2

Primary Rx

150

Primary Tx

Y

Z — X

EP 4 518 199 A1

## FIG. 13

EP 4 518 199 A1

*FIG. 14*

Reference Point

RP1

$\theta_l$

$W_{ERP}$

Width $W_{RP}$

Repeater

140

$\theta_l$

$\theta_p$

$\theta_p$

$\theta_\alpha$

RP2

160

Primary Rx

X

Y

Z

FIG. 15

FIG. 16

# FIG. 17

START

S101
CALCULATE INTERFERENCE REGION

S102
CALCULATE EXCLUSION ZONE

S103
DETERMINE WHETHER OR NOT
SPECTRUM IS AVAILABLE AND TRANSMISSION POWER

S104
NOTIFY COMMUNICATION DEVICE OF WHETHER OR NOT
SPECTRUM IS AVAILABLE AND TRANSMISSION POWER

END

# FIG. 18

```
        ┌─────────────────────┐
        │        START        │
        └─────────────────────┘
                   │
                   ▼
┌─────────────────────────────────────────────┐     S201
│        CALCULATE INTERFERENCE REGION          │
└─────────────────────────────────────────────┘
                   │
                   ▼
┌─────────────────────────────────────────────┐     S202
│ CALCULATE, FOR RECEIVER TO BE PROTECTED,      │
│ INTERFERENCE QUANTITY WITH BOTH INTERFERENCE  │
│ VIA REPEATER AND DIRECT INTERFERENCE          │
│ CAUSED BY RADIO WAVE TRANSMITTED BY           │
│ COMMUNICATION DEVICE IN INTERFERENCE          │
│ REGION TAKEN INTO CONSIDERATION               │
└─────────────────────────────────────────────┘
                   │
                   ▼
┌─────────────────────────────────────────────┐     S203
│ DETERMINE MAXIMUM ALLOWABLE TRANSMISSION POWER│
└─────────────────────────────────────────────┘
                   │
                   ▼
┌─────────────────────────────────────────────┐     S204
│       NOTIFY COMMUNICATION DEVICE OF          │
│   MAXIMUM ALLOWABLE TRANSMISSION POWER        │
└─────────────────────────────────────────────┘
                   │
                   ▼
        ┌─────────────────────┐
        │         END         │
        └─────────────────────┘
```

# FIG. 19

EP 4 518 199 A1

EP 4 518 199 A1

# INTERNATIONAL SEARCH REPORT

| International application No. |
|---|
| **PCT/JP2023/016738** |

## A. CLASSIFICATION OF SUBJECT MATTER

*H04B 17/391*(2015.01)i; *H04B 7/145*(2006.01)i; *H04B 17/345*(2015.01)i; *H04W 16/14*(2009.01)i; *H04W 16/26*(2009.01)i
FI:   H04B17/391; H04B7/145; H04B17/345; H04W16/14; H04W16/26

According to International Patent Classification (IPC) or to both national classification and IPC

## B. FIELDS SEARCHED

Minimum documentation searched (classification system followed by classification symbols)
    H04B17/391; H04B7/145; H04B17/345; H04W16/14; H04W16/26

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | WO 2011/132760 A1 (NEC CORPORATION) 27 October 2011 (2011-10-27)<br>p. 7, line 9 to p. 18, line 10, fig. 2-6 | 1-17 |
| A | JP 2018-142957 A (UNIV KYOTO) 13 September 2018 (2018-09-13)<br>paragraphs [0290]-[0408], fig. 16-24 | 1-17 |

☐ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/016738**

| Patent document cited in search report | | | Publication date (day/month/year) | Patent family member(s) | Publication date (day/month/year) |
|---|---|---|---|---|---|
| WO | 2011/132760 | A1 | 27 October 2011 | (Family: none) | |
| JP | 2018-142957 | A | 13 September 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Passive Repeater Engineering. *Microflect*, 1989, https://az276019.vo.msecnd.net/valmontstaging/vsna-resources/microflect-passive-repeater-catalog.pdf
- Electronic Code of Federal Regulations. *Subpart X Spectrum Leasing*, https://ecfr.federalregister.gov/-current/title-47/chapter-I/subchapter-D/part-96
- WINNF-TS-0061-V1.5.1 Test and Certification for Citizens Broadband Radio Service (CBRS); Conformance and Performance Test Technical Specification. *SAS as Unit Under Test (UUT)*, https://cbrs.wirelessinnovation.org/release-1-of-the-baseline-standard-specifications

- WINNF-TS-0016-V1.2.4 Signaling Protocols and Procedures for Citizens Broadband Radio Service (CBRS): Spectrum Access System (SAS). *Citizens Broadband Radio Service Device (CBSD) Interface Technical Specification*, https://cbrs.wirelessinnovation.org/release-1-of-the-baseline-standard-specifications
- *940660 D02 CBSD Handshake Procedures v02*, https://apps.fcc.gov/kdb/GetAttachment.html?id=RQe7oZJVSW t0fCcNiBV%2Bfw%3D%3D&desc=940660%20D02%20CPE-CBSD%20Handshake%20Procedures%20v02&tracking_-number=22929 7